# EUROPÄISCHE PATENTSCHRIFT

(11) **EP 3 736 874 B1**
(45) Veröffentlichungstag und Bekanntmachung des Hinweises auf die Patenterteilung: **18.09.2024**
(21) Anmeldenummer: 19173811.1
(22) Anmeldetag: 10.05.2019
(51) Int. Cl.: H01M 10/052, H01M 10/04, H01M 10/42, H01M 50/557, H01M 50/211, H01M 50/284, H01M 50/516, H01M 50/519, H01M 50/55, H01M 50/566, H01M 10/48

(54) **AKKUPACK, BEARBEITUNGSSYSTEM UND VERFAHREN ZUR HERSTELLUNG EINES AKKUPACKS**
BATTERY PACK, PROCESSING SYSTEM AND METHOD FOR PRODUCING A BATTERY PACK
BLOC D'ACCUMULATEUR, SYSTÈME D'USINAGE ET PROCÉDÉ DE FABRICATION D'UN BLOC D'ACCUMULATEUR

(43) Veröffentlichungstag der Anmeldung: 11.11.2020
(73) Patentinhaber: Andreas Stihl AG & Co. KG, 71336 Waiblingen (DE); Murata Manufacturing Co., Ltd., Nagaokakyo-shi, Kyoto 617-8555 (JP)
(72) Erfinder: SAUERTEIG, Daniel, 71394 Kernen im Remstal (DE); SCHOLL, Julien, 71336 Waiblingen (DE); SATO, Takayuki, Koriyama-shi, 963-0531 Fukushima (JP); MISAWA, Daiki, Koriyama-shi, 963-0531 Fukushima (JP); VON HOFEN, Malte, 70197 Stuttgart (DE); WAGNER, Daniel, 73650 Winterbach (DE); WILKA, Marcel, 73560 Böbingen (DE); SCHURR, Martin, 73557 Mutlangen (DE); BOSSMANN, Uwe, 73732 Esslingen a.N. (DE); LIEPOLD, Dirk, 70736 Fellbach (DE); OZAWA, Kenichi, Korijama-shi, 963-0531, Fukushima (JP)
(74) Vertreter: Patentanwälte Ruff, Wilhelm, Beier, Dauster & Partner mbB

(56) Entgegenhaltungen:
- EP-A1- 2 645 450
- EP-A2- 2 538 469
- DE-A1- 102015 000 142
- DE-A1- 102016 203 424
- US-A1- 2016 204 481

## Beschreibung

### ANWENDUNGSGEBIET UND STAND DER TECHNIK

Die Erfindung bezieht sich auf einen Akkupack zur Versorgung eines elektrisch angetriebenen Bearbeitungsgeräts mit elektrischer Antriebsleistung, auf ein Bearbeitungssystem aufweisend einen solchen Akkupack und ein elektrisch angetriebenes Bearbeitungsgerät und auf ein Verfahren zur Herstellung eines Akkupacks zur Versorgung eines elektrisch angetriebenen Bearbeitungsgeräts mit elektrischer Antriebsleistung.

Die EP 2 645 450 A1 offenbart ein Verfahren und eine Vorrichtung zur elektrischen Kontaktierung mindestens einer Elektrode einer oder mehrerer elektrochemischer Zellen. Die Vorrichtung umfasst ein nichtleitendes Elektrodendurchführungselement mit mindestens einer Elektrodendurchführungsöffnung und mindestens ein Kontaktelement, das zumindest teilweise aus einem leitfähigen Material gemacht ist und mit einem definierten Druck lösbar an dem Elektrodendurchführungselement montierbar ist. Des Weiteren umfasst die Vorrichtung mindestens die elektrochemische Zelle. Mindestens die Elektrode mindestens der elektrochemischen Zelle führt durch mindestens die Elektrodendurchgangsöffnung hindurch, ist nach der Durchführung durch die Durchgangsöffnung gebogen und ist durch den definierten kontrollierten Druck zwischen dem Elektrodendurchgangselement und mindestens dem Kontaktelement eingeklemmt. Eine Mehrzahl der Durchgangsöffnungen ist in mindestens einer Reihe angeordnet. Eine oder mehrere der Öffnungen in dem Elektrodendurchführungselement haben die Form eines Schlitzes. Das Elektrodendurchführungselement ist eine Leiterplatte.

### AUFGABE UND LÖSUNG

Der Erfindung liegt als Aufgabe die Bereitstellung eines Akkupacks zur Versorgung eines elektrisch angetriebenen Bearbeitungsgeräts mit elektrischer Antriebsleistung, eines Bearbeitungssystems aufweisend einen solchen Akkupack und ein elektrisch angetriebenes Bearbeitungsgerät und eines Verfahrens zur Herstellung eines Akkupacks zur Versorgung eines elektrisch angetriebenen Bearbeitungsgeräts mit elektrischer Antriebsleistung, wobei der Akkupack und das Verfahren jeweils verbesserte Eigenschaften aufweisen, zugrunde.

Die Erfindung löst die Aufgabe durch die Bereitstellung eines Akkupacks mit den Merkmalen des Anspruchs 1, eines Bearbeitungssystems mit den Merkmalen des Anspruchs 13 und eines Verfahrens mit den Merkmalen des Anspruchs 14. Vorteilhafte Weiterbildungen der Erfindung sind in den abhängigen Ansprüchen beschrieben.

Der erfindungsgemäße Akkupack ist zur, insbesondere automatischen, Versorgung eines elektrisch angetriebenen Bearbeitungsgeräts, insbesondere Garten-, Forst- und/oder Baubearbeitungsgeräts, mit elektrischer Antriebsleistung ausgebildet bzw. konfiguriert. Der Akkupack weist mehrere Pouchzellen und eine Leiterplatte auf. Die Pouchzellen weisen Zelltabs auf und sind derart ausgebildet bzw. konfiguriert und in einem Stapel angeordnet, dass, insbesondere alle, die Zelltabs, insbesondere nur, auf einer, insbesondere einzigen, gemeinsamen Tabseite des Stapels in, insbesondere genau, zwei Tabspalten angeordnet sind. Abgewandte bzw. entfernte Endgrenzen der Tabspalten definieren bzw. begrenzen einen Zwischenbereich. Die Leiterplatte ist, insbesondere vollständig, nur innerhalb des Zwischenbereichs angeordnet und mit den Zelltabs elektrisch verbunden.

Dies ermöglicht einen relativ kompakten Aufbau des Akkupacks. Zugleich ermöglicht dies, dass die Tabspalten zeitlich nach dem Anordnen von der Leiterplatte von außen weiterhin relativ gut zugänglich sein können, und somit eine relativ einfache Herstellung des Akkupacks.

Insbesondere können die Pouchzellen zur Versorgung des Bearbeitungsgeräts mit der Antriebsleistung ausgebildet sein. Zusätzlich oder alternativ können die Pouchzellen Akkumulatorzellen bzw. jeweils einzelne wiederaufladbare Speicherelemente für elektrische Energie auf elektrochemischer Basis sein. Insbesondere können die Pouchzellen Lithium-Ionen-Akkumulatorzellen sein. Weiter zusätzlich oder alternativ können die Pouchzellen elektrisch zusammengeschaltet sein, insbesondere parallel oder seriell geschaltet sein. Insbesondere können die Zelltabs, insbesondere jeweils, nächster Pouchzellen miteinander elektrisch verbunden sein. Weiter zusätzlich oder alternativ können die Pouchzellen Flachzellen sein. Weiter zusätzlich oder alternativ kann eine Fläche der Pouchzellen rechteckig sein. Weiter zusätzlich oder alternativ können die Pouchzellen gleich, insbesondere typ- und/oder baugleich, sein.

Die Pouchzellen können in dem Stapel auf- bzw. übereinander angeordnet sein. Zusätzlich oder alternativ kann der Stapel quaderförmig sein, und insbesondere kann die Tabseite eine Quaderseite sein.

Die Zelltabs können als Kontaktfahnen, Zellkontakte, Terminals, Pole oder Anschluss-Elektroden bezeichnet werden. Zusätzlich oder alternativ können die Pouchzellen, insbesondere jeweils, die Zelltabs an einem gleichen Rand bzw. einer gleichen Kante, insbesondere einer Außen- bzw. Zellhülle der Pouchzelle, aufweisen. Weiter zusätzlich oder alternativ können die Zelltabs der Pouchzellen, insbesondere einer jeweiligen der Pouchzellen, und somit die Tabspalten zueinander beabstandet sein. In anderen Worten: die Pouchzellen können jeweils zwei zueinander beabstandete Zelltabs aufweisen und derart ausgebildet und in dem Stapel angeordnet sein, dass Zelltabs verschiedener der Pouchzellen in einer ersten der Tabspalten und andere Zelltabs verschiedener der Pouchzellen in einer zweiten der Tabspalten angeordnet sein können, wobei die erste Tabspalte und die zweite Tabspalte zueinander beabstandet sein können. Weiter zusätzlich oder alternativ können die Tabspalten als Tabreihen bezeichnet werden. Weiter zusätzlich oder alternativ können die Tabspalten parallel zueinander sein bzw. verlaufen.

Die Leiterplatte kann auf der Tabseite an dem Stapel angeordnet sein. Insbesondere kann an dem Stapel bedeuten, dass die Leiterplatte maximal 20 Millimeter (mm), insbesondere maximal 10 mm, insbesondere maximal 5 mm, zu dem Stapel beabstandet angeordnet sein kann. Zusätzlich oder alternativ braucht die Leiterplatte nicht zu den abgewandten Endgrenzen hinreichen. Weiter zusätzlich oder alternativ kann die Leiterplatte zwischen den Tabspalten, insbesondere zwischen zugewandten bzw. nahen Endgrenzen der Tabspalten, angeordnet sein. Weiter zusätzlich oder alternativ kann die Leiterplatte die Tabspalten, insbesondere jeweils, mindestens teilweise freilassen bzw. nicht verdecken.

In einer Weiterbildung der Erfindung ist die Leiterplatte mit einer Plattenebene parallel zu der Tabseite angeordnet. Insbesondere entspricht die Plattenebene einer durch die Tabspalten definierten Tabebene. Dies ermöglicht einen besonders kompakten Aufbau des Akkupacks. Zugleich ermöglicht dies, dass die Leiterplatte den Zelltabs besonders nah sein kann. Insbesondere können die Zelltabs mit Tabteilen parallel zu der Tabseite verlaufen und die Tabteile können die Tabebene definieren. Insbesondere kann die Leiterplatte mit den Tabteilen elektrisch verbunden sein.

In einer Weiterbildung der Erfindung trägt die Leiterplatte Messelektronik. Die Messelektronik ist zur, insbesondere automatischen, Messung von, insbesondere elektrischen, Spannungen, insbesondere Werten der Spannungen, insbesondere aller, der Pouchzellen ausgebildet bzw. konfiguriert. Dies ermöglicht sicherheitskritische Zustände der Pouchzellen zu erfassen. Insbesondere können die Spannungen Mittelspannungen sein.

In einer Weiterbildung der Erfindung sind elektrische Verbindungen, insbesondere elektrische Zellverbinder, zwischen der Leiterplatte, insbesondere der Messelektronik, soweit vorhanden, und mehreren der Zelltabs gleich, insbesondere kurz. Dies ermöglicht einen gleichen Einfluss durch die elektrischen Verbindungen, wenn überhaupt, insbesondere auf die Spannungsmessungen, soweit vorhanden. Insbesondere können die elektrischen Verbindungen in zwei Verbinderspalten angeordnet sein. Insbesondere können die Verbinderspalten parallel zueinander und/oder zu den Tabspalten sein bzw. verlaufen.

In einer Weiterbildung der Erfindung ist die Leiterplatte, insbesondere die Messelektronik, soweit vorhanden, mit mehreren der Zelltabs mittels, insbesondere der, elektrischer Zellverbinder elektrisch verbunden. Die Zellverbinder sind unflexibel. Dies ermöglicht, insbesondere wenn die Zellverbinder zeitlich vor einem Anordnen von der Leiterplatte innerhalb des Zwischenbereichs mit einem jeweiligen Ende mit der Leiterplatte, insbesondere mechanisch, verbunden sind, dass die Zellverbinder zeitlich nach dem Anordnen mit einem jeweiligen anderen Ende an den Zelltabs positioniert sein können. Dies kann ein relativ einfaches elektrisches Verbinden der Leiterplatte mit den Zelltabs ermöglichen. Insbesondere brauchen die Zellverbinder keine Kabel sein. Zusätzlich oder alternativ können die elektrischen Zellverbinder in zwei Verbinderspalten angeordnet sein. Insbesondere können die Verbinderspalten parallel zueinander und/oder zu den Tabspalten sein bzw. verlaufen.

In einer Weiterbildung der Erfindung ist die Leiterplatte mit mehreren der Zelltabs mittels, insbesondere der, elektrischer Zellverbinder elektrisch verbunden. Die Zellverbinder ragen bzw. stehen, insbesondere jeweils, über einen Plattenrand der Leiterplatte, insbesondere in Richtung mindestens einer der Endgrenzen der Tabspalten, hinaus. Dies ermöglicht, dass die Zellverbinder zu den Zelltabs hinreichen können. Insbesondere können die elektrischen Zellverbinder in zwei Verbinderspalten angeordnet sein. Insbesondere können die Verbinderspalten parallel zueinander und/oder zu den Tabspalten sein bzw. verlaufen.

In einer Weiterbildung der Erfindung ist die Leiterplatte mit mehreren der Zelltabs, insbesondere jeweils, durch eine stoffschlüssige Verbindung, insbesondere eine Schweißverbindung, elektrisch, und insbesondere mechanisch, verbunden.

Zusätzlich oder alternativ sind die Zelltabs, insbesondere jeweils, nächster Pouchzellen durch eine stoffschlüssige Verbindung, insbesondere eine Schweißverbindung, miteinander, insbesondere unmittelbar, elektrisch, und insbesondere mechanisch, verbunden.

Zusätzlich oder alternativ weist der Akkupack eine Stapelbegrenzungsstruktur, insbesondere ein Stapelgehäuse, auf. Die Stapelbegrenzungsstruktur weist ein erstes Strukturteil, insbesondere Gehäuseteil, und ein zweites Strukturteil, insbesondere Gehäuseteil, auf. Der Stapel ist zwischen dem ersten Strukturteil und dem zweiten Strukturteil angeordnet. Das erste Strukturteil und das zweite Strukturteil sind durch mindestens eine stoffschlüssige Verbindung, insbesondere eine Schweißverbindung, miteinander, insbesondere unmittelbar, mechanisch verbunden.

Zusätzlich oder alternativ weist der Akkupack mindestens einen elektrischen Leistungsverbinder auf. Der elektrische Leistungsverbinder ist mit einem der Zelltabs durch eine stoffschlüssige Verbindung, insbesondere eine Schweißverbindung, insbesondere unmittelbar, elektrisch, und insbesondere mechanisch, verbunden.

Das Anordnen der Leiterplatte innerhalb des Zwischenbereichs ermöglicht, dass zeitlich nach dem Anordnen der Leiterplatte die Leiterplatte mit den mehreren der Zelltabs, die Zelltabs miteinander, das erste Strukturteil und das zweite Strukturteil miteinander und/oder der Leistungsverbinder mit dem Zelltab in, insbesondere nur, einem, insbesondere einzigen und/oder gemeinsamen, Herstellungsschritt durch die, insbesondere jeweilige, stoffschlüssige Verbindung verbunden sein oder werden können.

Insbesondere können die elektrischen Zellverbinder, soweit vorhanden, mit den mehreren der Zelltabs, insbesondere jeweils, durch die stoffschlüssige Verbindung verbunden sein. Zusätzlich oder alternativ kann das Stapelgehäuse massiv und/oder quaderförmig sein. Weiter zusätzlich oder alternativ kann die Stapelbegrenzungsstruktur teilweise oder sogar vollständig aus Aluminium bestehen. Weiter zusätzlich oder alternativ kann die Schweißverbindung eine Laserschweißverbindung oder eine Ultraschallschweißverbindung sein.

In einer Weiterbildung der Erfindung weist der Akkupack eine, insbesondere die, Stapelbegrenzungsstruktur, insbesondere ein Stapelgehäuse, auf. Die Stapelbegrenzungsstruktur weist eine durch einen Strukturrand, insbesondere der Stapelbegrenzungsstruktur, definierte, insbesondere gemeinsame, Strukturöffnung auf. Die Pouchzellen sind derart ausgebildet bzw. konfiguriert und in dem Stapel innerhalb der Stapelbegrenzungsstruktur angeordnet, dass, insbesondere alle, die Zelltabs mindestens mit Tabteilen, insbesondere jeweils, an der Strukturöffnung über mindestens einen Randabschnitt des Strukturrands hinausragen, insbesondere durch die Strukturöffnung nach außen. Die Leiterplatte ist mit den Tabteilen elektrisch verbunden.

Zusätzlich oder alternativ weist der Akkupack eine, insbesondere die, Stapelbegrenzungsstruktur, insbesondere ein Stapelgehäuse, aufweisend eine, insbesondere die, insbesondere gemeinsame, Strukturöffnung und einen Rahmen auf. Der Stapel ist innerhalb der Stapelbegrenzungsstruktur angeordnet. Insbesondere alle, die Zelltabs sind an der Strukturöffnung angeordnet. Der Rahmen trägt die Leiterplatte und ist an der Strukturöffnung angeordnet. Insbesondere alle, die Zelltabs und die Leiterplatte sind mittels der Stapelbegrenzungsstruktur und des Rahmens zueinander positioniert, insbesondere fixiert.

Das Hinausragen der Tabteile ermöglicht, dass die Tabteile zeitlich nach einem Anordnen der Pouchzellen in dem Stapel innerhalb der Stapelbegrenzungsstruktur mit der Leiterplatte, miteinander und/oder mit dem elektrischen Leistungsverbinder, soweit vorhanden, durch die, insbesondere jeweilige, stoffschlüssige Verbindung, soweit vorhanden, relativ einfach verbunden sein oder werden können.

Die Stapelbegrenzungsstruktur und der Rahmen ermöglichen eine relativ einfache Positionierung.

Insbesondere kann das Stapelgehäuse massiv und/oder quaderförmig sein. Zusätzlich oder alternativ kann die Stapelbegrenzungsstruktur teilweise oder sogar vollständig aus Aluminium bestehen. Weiter zusätzlich oder alternativ kann der Strukturrand eine Öffnungsebene der Strukturöffnung definieren. Die Öffnungsebene kann parallel zu der Tabseite sein bzw. verlaufen. Weiter zusätzlich oder alternativ können die Tabteile parallel zu der Tabseite und/oder zu der Öffnungsebene sein bzw. verlaufen. Weiter zusätzlich oder alternativ können die Tabteile, insbesondere vollständig und/oder nur, außerhalb der Stapelbegrenzungsstruktur angeordnet sein. Weiter zusätzlich oder alternativ können die Pouchzellen mit Außen- bzw. Zellhüllen, insbesondere vollständig und/oder nur, in dem Stapel innerhalb der Stapelbegrenzungsstruktur angeordnet sein. Weiter zusätzlich oder alternativ kann der Rahmen teilweise oder sogar vollständig aus Kunststoff bestehen.

In einer Weiterbildung der Erfindung weist der Akkupack eine weitere Leiterplatte auf. Die weitere Leiterplatte ist auf der Tabseite entfernter als die Leiterplatte von dem Stapel angeordnet, insbesondere mit einer weiteren Plattenebene parallel zu der Tabseite.

Die weitere Leiterplatte ist breiter als die Tabspalten.

Zusätzlich oder alternativ trägt die weitere Leiterplatte Leistungselektronik. Die Leistungselektronik ist zur, insbesondere automatischen, Steuerung, insbesondere Beendigung, der Abgabe der Antriebsleistung von dem Akkupack und/oder einer Aufnahme von Ladeleistung durch den Akkupack, insbesondere in Abhängigkeit von den gemessenen Spannungen, soweit vorhanden, ausgebildet bzw. konfiguriert.

Die Breite ermöglicht einen relativ großen Abstand zwischen einer Low-Side und einer High-Side der weiteren Leiterplatte.

Die Leistungselektronik ermöglicht sicherheitskritische Zustände der Pouchzellen und somit des Akkupacks gering zu halten oder sogar ganz zu vermeiden. Zusätzlich oder alternativ ermöglicht die entfernte Anordnung der weiteren Leiterplatte einen Einfluss von Wärme der Leistungselektronik auf die Pouchzellen gering zu halten oder sogar ganz zu vermeiden und/oder eine relativ gute Abfuhr der Wärme nach außen. Weiter zusätzlich oder alternativ ermöglicht die entfernte Anordnung der weiteren Leiterplatte einen Einfluss von relativ hohen elektrischen Strömen der Leistungselektronik auf die Messelektronik, soweit vorhanden, gering zu halten oder sogar ganz zu vermeiden.

Insbesondere kann die weitere Leiterplatte außerhalb des Zwischenbereichs angeordnet sein und/oder über die abgewandten Endgrenzen der Tabspalten hinausragen bzw. hinausstehen. Zusätzlich oder alternativ kann die Breite der weiteren Leiterplatte einer Breite des Stapels entsprechen, insbesondere gleichen. Weiter zusätzlich oder alternativ kann die Low-Side der weiteren Leiterplatte bei einer ersten der Tabspalten angeordnet sein und die High-Side der weiteren Leiterplatte kann bei einer zweiten der Tabspalten angeordnet sein.

In einer Weiterbildung der Erfindung weist der Akkupack eine, insbesondere nochmals, weitere Leiterplatte auf. Die, insbesondere nochmals, weitere Leiterplatte ist auf der Tabseite entfernter als die Leiterplatte, und insbesondere als die weitere Leiterplatte, soweit vorhanden, von dem Stapel angeordnet, insbesondere mit einer, insbesondere nochmals, weiteren Plattenebene parallel zu der Tabseite. Die, insbesondere nochmals, weitere Leiterplatte trägt Benutzerschnittstellenelektronik und/oder Übertragungselektronik. Die Benutzerschnittstellenelektronik ist zur, insbesondere automatischen, Interaktion mit einem Benutzer ausgebildet bzw. konfiguriert. Die Übertragungselektronik ist zur, insbesondere automatischen, kabellosen Übertragung von mindestens einem Betriebsparameter und/oder Betriebszustand ausgebildet bzw. konfiguriert. Die entfernte Anordnung der, insbesondere nochmals, weiteren Leiterplatte ermöglicht eine relativ gute Zugänglichkeit der Benutzerschnittstellenelektronik von außen und/oder eine relativ gute Übertragung der Übertragungselektronik von und/oder nach außen. Insbesondere kann die Benutzerschnittstellenelektronik zum Ausgeben eines Ladezustands des Akkupacks ausgebildet sein. Zusätzlich oder alternativ kann die Übertragungselektronik zur unidirektionalen oder bidirektionalen Übertragung von dem mindestens einen Betriebsparameter und/oder Betriebszustand ausgebildet sein.

In einer Weiterbildung der Erfindung weist die Leiterplatte eine Aussparung, insbesondere ein Durchgangsloch, auf. Die Aussparung ist zur Durchführung einer Sensorleitung, für einen Fluss von Vergussmasse und/oder zur Positionierung der Leiterplatte ausgebildet bzw. konfiguriert. Insbesondere kann die Sensorleitung von einem Temperatursensor zur Messung einer Temperatur der Pouchzellen und/oder einem Drucksensor zur Erfassung, insbesondere Messung, eines Drucks der Pouchzellen sein. Die Vergussmasse kann einen Schutz der Leiterplatte, und insbesondere die Zelltabs, vor Feuchte und/oder mechanischer Belastung und/oder eine Wärmeableitung ermöglichen.

In einer Weiterbildung der Erfindung weist der Akkupack, insbesondere weisen die Pouchzellen, eine maximale elektrische Antriebsleistung von minimal 1 Kilowatt (kW), insbesondere von minimal 2 kW, und/oder von maximal 10 kW, insbesondere von maximal 5 kW, auf.

Zusätzlich oder alternativ weist der Akkupack, insbesondere weisen die Pouchzellen, eine, insbesondere elektrische, Nennspannung von minimal 10 Volt (V), insbesondere von minimal 20 V, und/oder von maximal 100 V, insbesondere von maximal 50 V, auf.

Zusätzlich oder alternativ weist der Akkupack, insbesondere weisen die Pouchzellen, einen, insbesondere elektrischen, maximalen Energieinhalt von minimal 100 Wattstunden (Wh), insbesondere von minimal 200 Wh, und/oder von maximal 1000 Wh, insbesondere von maximal 500 Wh, auf.

Zusätzlich oder alternativ weist der Akkupack eine Masse von minimal 0,5 Kilogramm (kg), insbesondere von minimal 1 kg, und/oder von maximal 10 kg, insbesondere von maximal 5 kg, auf.

Zusätzlich oder alternativ weist der Akkupack eine Höhe von minimal 2,5 Zentimeter (cm) und/oder von maximal 10 cm, und/oder eine Breite von minimal 5 cm und/oder von maximal 20 cm, und/oder eine Tiefe von minimal 7,5 cm und/oder von maximal 30 cm auf.

Das erfindungsgemäße Bearbeitungssystem weist einen, insbesondere den, Akkupack wie zuvor beschrieben und ein, insbesondere das, elektrisch angetriebenes Bearbeitungsgerät auf. Der Akkupack und das Bearbeitungsgerät sind zur elektrischen Verbindung miteinander zur, insbesondere automatischen, Versorgung des Bearbeitungsgeräts mit elektrischer Antriebsleistung von dem Akkupack ausgebildet bzw. konfiguriert.

Insbesondere kann das Bearbeitungssystem ein Garten-, Forst- und/oder Baubearbeitungssystem sein. Zusätzlich oder alternativ kann das Bearbeitungsgerät ein Garten-, Forst- und/oder Baubearbeitungsgerät sein. Weiter zusätzlich oder alternativ kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine maximale Masse von 50 Kilogramm (kg), insbesondere von 20 kg, insbesondere von 10 kg, aufweisen kann. Weiter zusätzlich oder alternativ kann das Bearbeitungsgerät einen Elektroantriebsmotor aufweisen. Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere lösbaren, insbesondere werkzeugfrei und/oder zerstörungsfrei lösbaren, mechanischen Verbindung miteinander ausgebildet sein. Insbesondere kann das Bearbeitungsgerät zum Tragen des Akkupacks ausgebildet sein.

In einer Weiterbildung der Erfindung weist das Bearbeitungsgerät eine Akkuaufnahme, insbesondere einen Akkuschacht, auf. Die Akkuaufnahme ist zum Aufnehmen des Akkupacks ausgebildet bzw. konfiguriert.

In einer Weiterbildung der Erfindung ist das Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

Das erfindungsgemäße Verfahren zur Herstellung eines, insbesondere des, Akkupacks, insbesondere wie zuvor beschrieben, zur Versorgung eines, insbesondere des, elektrisch angetriebenen Bearbeitungsgeräts mit elektrischer Antriebsleistung weist die Schritte auf: a) Anordnen von, insbesondere den, mehreren Pouchzellen derart in einem, insbesondere dem, Stapel, wobei die Pouchzellen, insbesondere die, Zelltabs aufweisen und derart ausgebildet sind, dass die Zelltabs auf einer, insbesondere der, gemeinsamen Tabseite des Stapels in, insbesondere den, zwei Tabspalten angeordnet sind, wobei, insbesondere die, abgewandte Endgrenzen der Tabspalten einen, insbesondere den, Zwischenbereich definieren. b) Anordnen von einer, insbesondere der, Leiterplatte nur innerhalb des Zwischenbereichs, insbesondere zeitlich nach dem Schritt a). c) Elektrisches Verbinden der Leiterplatte mit den Zelltabs, insbesondere zeitlich nach dem Schritt b).

Das Verfahren kann die gleichen Vorteile ermöglichen wie der zuvor beschriebene Akkupack.

Insbesondere kann die Leiterplatte mit den Zelltabs mittels, insbesondere der, elektrischer Zellverbinder elektrisch verbunden werden.

In einer Weiterbildung der Erfindung wird der Schritt b) zeitlich nach dem Schritt a) durchgeführt. Der Schritt c) wird zeitlich nach dem Schritt b) durchgeführt und weist auf: stoffschlüssiges Verbinden, insbesondere Verschweißen, der Leiterplatte mit mehreren der Zelltabs, insbesondere jeweils, zum elektrischen, und insbesondere mechanischen, Verbinden der Leiterplatte mit den Zelltabs und stoffschlüssiges Verbinden, insbesondere Verschweißen, der Zelltabs, insbesondere jeweils, nächster Pouchzellen zum, insbesondere unmittelbaren, elektrischen, und insbesondere mechanischen, Verbinden der Zelltabs nächster Pouchzellen miteinander. Dies wird durch das Anordnen der Leiterplatte innerhalb des Zwischenbereichs ermöglicht. Insbesondere können die elektrischen Zellverbinder, soweit vorhanden, mit den mehreren der Zelltabs, insbesondere jeweils, stoffschlüssig verbunden werden. Zusätzlich oder alternativ kann das Verschweißen ein Laserschweißen oder ein Ultraschallschweißen sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Bearbeitungssystems aufweisend einen erfindungsgemäßen Akkupack und ein elektrisch angetriebenes Bearbeitungsgerät in Form einer Säge, eines Trennschleifers und eines Blasgeräts,
- Fig. 2: eine Explosionsansicht des Akkupacks der Fig. 1,
- Fig. 3: eine Perspektivansicht eines ersten Strukturteils einer Stapelbegrenzungsstruktur des Akkupacks der Fig. 1,
- Fig. 4: eine Perspektivansicht des ersten Strukturteils, von Pouchzellen, eines Drucksensors und eines inneren Temperatursensors des Akkupacks der Fig. 1 und eines erfindungsgemäßen Verfahrens,
- Fig. 5: eine Perspektivansicht des ersten Strukturteils, von Pouchzellen, des Drucksensors und des inneren Temperatursensors angeordnet in einem Stapel des Akkupacks der Fig. 1 und des erfindungsgemäßen Verfahrens,
- Fig. 6: eine Perspektivansicht des ersten Strukturteils, des Stapels und eines zweiten Strukturteils der Stapelbegrenzungsstruktur des Akkupacks der Fig. 1 und des erfindungsgemäßen Verfahrens,
- Fig. 7: eine Perspektivansicht des ersten Strukturteils, des Stapels, des zweiten Strukturteils und einer Leiterplatte des Akkupacks der Fig. 1 und des erfindungsgemäßen Verfahrens,
- Fig. 8: eine Seitenansicht der Stapelbegrenzungsstruktur und von Zelltabs mit Tabteilen der Pouchzellen des Akkupacks der Fig. 1 und einer Schweißunterlage und des erfindungsgemäßen Verfahrens,
- Fig. 9: eine Perspektivansicht des ersten Strukturteils, des Stapels, des zweiten Strukturteils, der Leiterplatte und einer weiteren Leiterplatte des Akkupacks der Fig. 1,
- Fig. 10: eine Perspektivansicht des ersten Strukturteils, des Stapels, des zweiten Strukturteils, der Leiterplatte, der weiteren Leiterplatte und einer nochmals weiteren Leiterplatte des Akkupacks der Fig. 1,
- Fig. 11: eine Perspektivansicht von einer Rückseite des ersten Strukturteils, des Stapels, des zweiten Strukturteils, der Leiterplatte, der weiteren Leiterplatte, der nochmals weiteren Leiterplatte und eines äußeren Temperatursensors des Akkupacks der Fig. 1,
- Fig. 12: eine Perspektivansicht des äußeren Temperatursensors des Akkupacks der Fig. 1,
- Fig. 13: eine Perspektivansicht eines Akkupackgehäuses des Akkupacks der Fig. 1, und
- Fig. 14: eine Schnittansicht des Akkupacks der Fig. 1 aufweisend Vergussmasse.

### DETAILLIERTE BESCHREIBUNG DER AUSFÜHRUNGSBEISPIELE

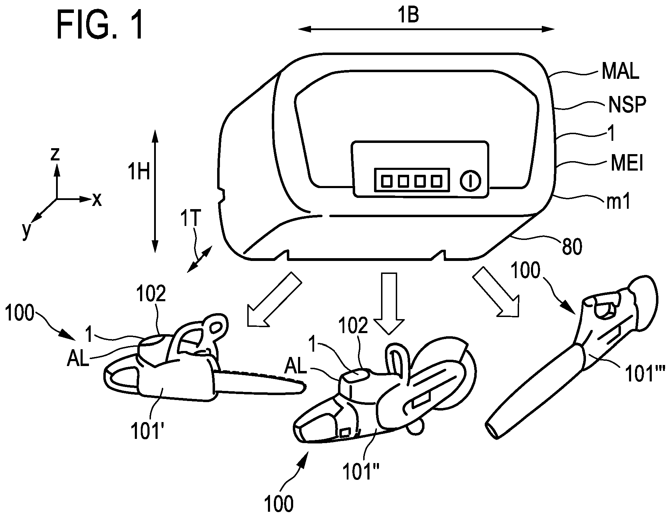

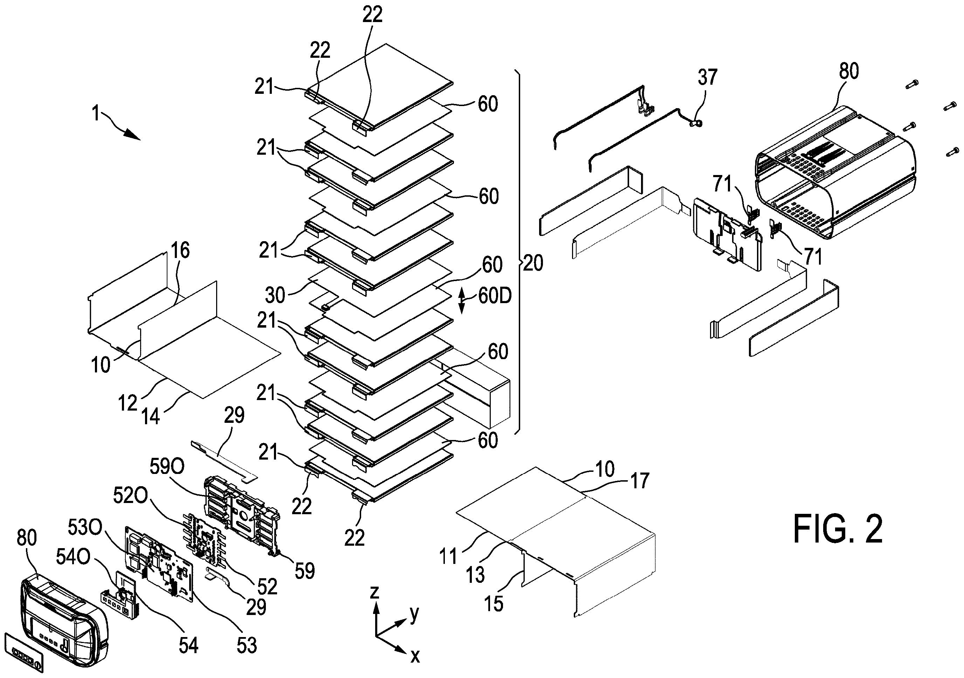

Fig. 1 bis 14 zeigen einen erfindungsgemäßen Akkupack 1 zur Versorgung eines elektrisch angetriebenen Bearbeitungsgeräts 101 mit elektrischer Antriebsleistung AL und ein erfindungsgemäßes Verfahren zur Herstellung des Akkupacks 1 zur Versorgung des elektrisch angetriebenen Bearbeitungsgeräts 101 mit elektrischer Antriebsleistung AL.

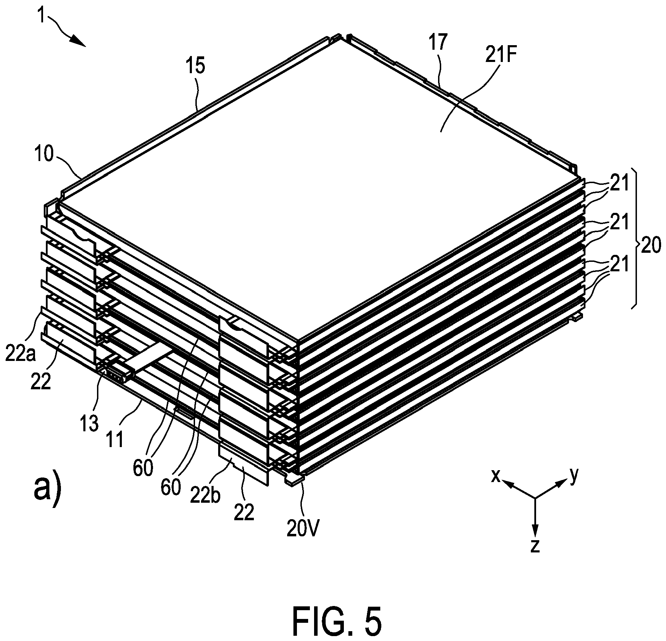

Der Akkupack 1 weist mehrere Pouchzellen 21 und eine Leiterplatte 52 auf, wie in Fig. 5 bis 7 gezeigt. Die Pouchzellen 21 weisen Zelltabs 22 auf und sind derart ausgebildet und in einem Stapel 20 angeordnet, dass die Zelltabs 22 auf einer gemeinsamen Tabseite, insbesondere Vorderseite, 20V des Stapels 20 in zwei Tabspalten 22a, 22b angeordnet sind. Abgewandte Endgrenzen 22aL, 22bR der Tabspalten 22a, 22b definieren einen Zwischenbereich 22Z. Die Leiterplatte 52 ist innerhalb des Zwischenbereichs 22Z angeordnet und mit den Zelltabs 22 elektrisch verbunden.

Das Verfahren weist die Schritte auf: a) Anordnen von den mehreren Pouchzellen 21 derart in dem Stapel 20, wobei die Pouchzellen 21 die Zelltabs 22 aufweisen und derart ausgebildet sind, dass die Zelltabs 22 auf der gemeinsamen Tabseite 20V des Stapels 20 in den zwei Tabspalten 22a, 22b angeordnet sind, wobei die abgewandten Endgrenzen 22aL, 22bR der Tabspalten 22a, 22b den Zwischenbereich 22Z definieren. b) Anordnen von der Leiterplatte 52 innerhalb des Zwischenbereichs 22Z. c) Elektrisches Verbinden der Leiterplatte 52 mit den Zelltabs 22.

Im gezeigten Ausführungsbeispiel weist der Akkupack 1 zehn Pouchzellen 21 auf. In alternativen Ausführungsbeispielen kann der Akkupack mindestens zwei Pouchzellen aufweisen.

Des Weiteren sind im gezeigten Ausführungsbeispiel die Pouchzellen 21 in dem Stapel 20 in einer Stapelrichtung z angeordnet. Außerdem erstrecken im gezeigten Ausführungsbeispiel die Pouchzellen 21 sich jeweils in zu der Stapelrichtung z orthogonalen Richtungen x, y.

Weiter sind bzw. verlaufen im gezeigten Ausführungsbeispiel die Tabspalten 22a, 22b in der Stapelrichtung z. Zudem definieren bzw. begrenzen im gezeigten Ausführungsbeispiel die abgewandten Endgrenzen 22aL, 22bR der Tabspalten 22a, 22b den Zwischenbereich 22Z in der zu der Stapelrichtung z orthogonalen Richtung x, -x.

Des Weiteren ist im gezeigten Ausführungsbeispiel die Leiterplatte 52 zwischen den Tabspalten 22a, 22b, insbesondere zwischen zugewandten Endgrenzen 22aR, 22bL der Tabspalten 22a, 22b, angeordnet. Außerdem ist im gezeigten Ausführungsbeispiel die Leiterplatte 52 auf der Tabseite, insbesondere Vorderseite, 20V an dem Stapel 20 angeordnet.

Im Detail ist die Leiterplatte 52 mit einer Plattenebene 52E parallel zu der Tabseite 20V angeordnet. Insbesondere entspricht die Plattenebene 52E einer durch die Tabspalten 22a, 22b definierten Tabebene 22E.

Des Weiteren trägt die Leiterplatte 52 Messelektronik 55. Die Messelektronik 55 ist zur Messung von Spannungen SP der Pouchzellen 21 ausgebildet.

Außerdem sind elektrische Verbindungen 52eV`, insbesondere elektrische Zellverbinder 52eV", zwischen der Leiterplatte 52, insbesondere der Messelektronik 55, und mehreren der Zelltabs 22 gleich, insbesondere kurz.

Weiter ist die Leiterplatte 52, insbesondere die Messelektronik 55, mit den mehreren der Zelltabs 22 mittels der elektrischen Zellverbinder 52eV" elektrisch verbunden.

Die Zellverbinder 52eV" sind unflexibel.

Insbesondere sind die Zellverbinder 52eV" zeitlich vor dem Schritt b) mit einem jeweiligen Ende mit der Leiterplatte 52, insbesondere mechanisch, verbunden. Somit sind die Zellverbinder 52eV" zeitlich nach dem Schritt b) und zeitlich vor dem Schritt c) mit einem jeweiligen anderen Ende an den Zelltabs 22 positioniert.

Zudem ragen die Zellverbinder 52eV", insbesondere jeweils, über einen Plattenrand 52R der Leiterplatte 52, insbesondere in zu der Stapelrichtung z orthogonalen Richtung x, -x mindestens einer der Endgrenzen 22aL, 22bR der Tabspalten 22a, 22b, hinaus.

Des Weiteren ist die Leiterplatte 52, insbesondere sind die elektrischen Zellverbinder 52eV", mit den mehreren der Zelltabs 22, insbesondere jeweils, durch eine stoffschlüssige Verbindung 52S, insbesondere eine Schweißverbindung, elektrisch verbunden.

Zusätzlich sind die Zelltabs 22, insbesondere jeweils, nächster Pouchzellen 21 durch eine stoffschlüssige Verbindung 22S, insbesondere eine Schweißverbindung, miteinander, insbesondere unmittelbar, elektrisch verbunden.

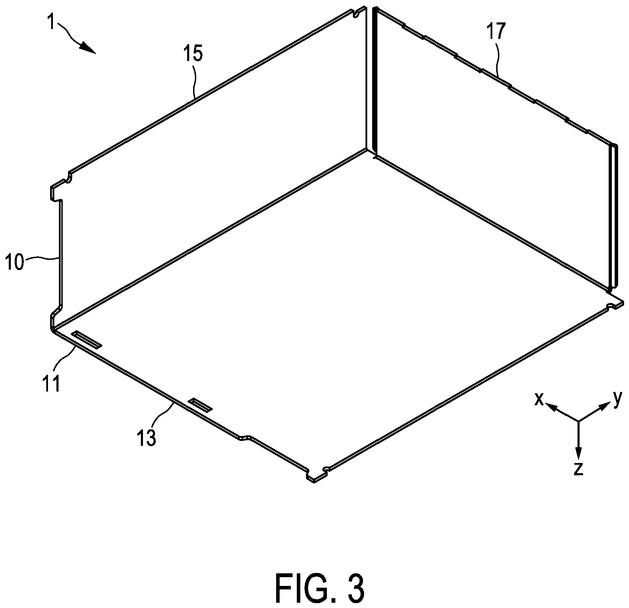

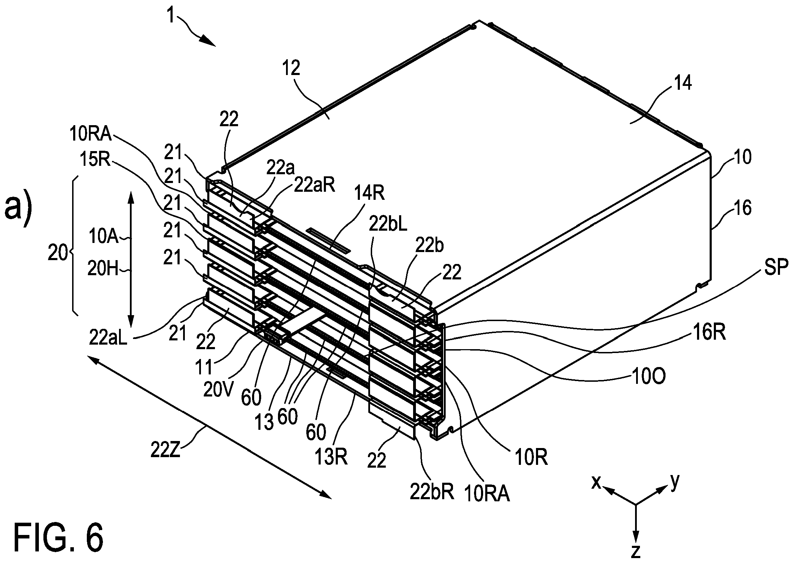

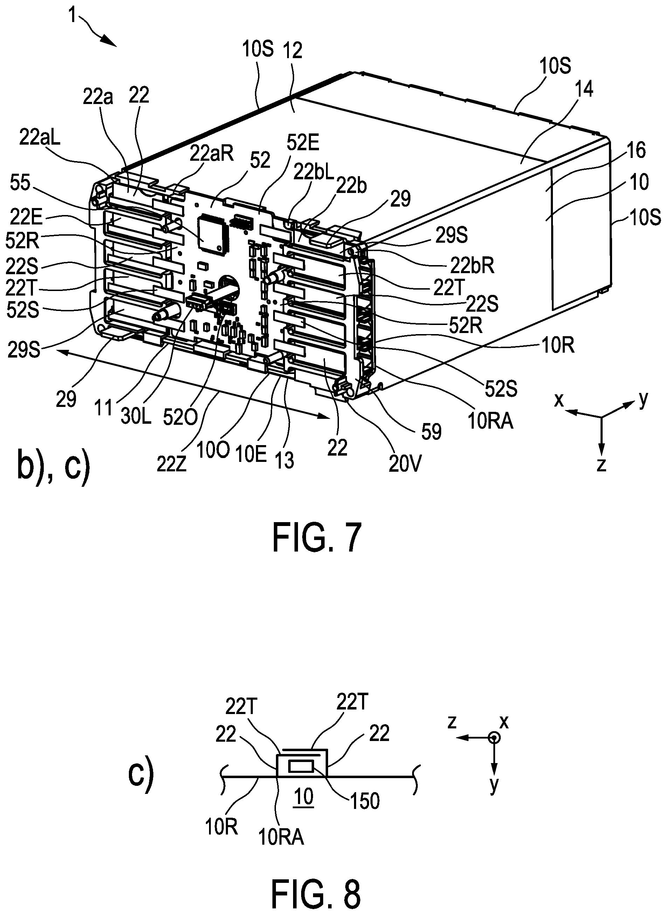

Zusätzlich weist der Akkupack 1 eine Stapelbegrenzungsstruktur 10, insbesondere ein Stapelgehäuse, auf. Die Stapelbegrenzungsstruktur 10 weist ein erstes Strukturteil 11, wie in Fig. 3 gezeigt, und ein zweites Strukturteil 12, wie in Fig. 6 gezeigt auf. Der Stapel 20 ist zwischen dem ersten Strukturteil 11 und dem zweiten Strukturteil 12 angeordnet. Das erste Strukturteil 11 und das zweite Strukturteil 12 sind durch mindestens eine stoffschlüssige Verbindung 10S, insbesondere eine Schweißverbindung, miteinander, insbesondere unmittelbar, mechanisch verbunden, wie in Fig. 7 gezeigt.

Zusätzlich weist der Akkupack 1 mindestens einen elektrischen Leistungsverbinder 29 auf, im gezeigten Ausführungsbeispiel zwei Leistungsverbinder 29. Der elektrische Leistungsverbinder 29 ist mit einem der Zelltabs 22 durch eine stoffschlüssige Verbindung 29S, insbesondere eine Schweißverbindung, insbesondere unmittelbar, elektrisch verbunden.

Der Schritt b) wird zeitlich nach dem Schritt a) durchgeführt. Der Schritt c) wird zeitlich nach dem Schritt b) durchgeführt und weist auf: stoffschlüssiges Verbinden, insbesondere Verschweißen, der Leiterplatte 52, insbesondere der elektrischen Zellverbinder 52eV", mit den mehreren der Zelltabs 22, insbesondere jeweils, zum elektrischen Verbinden der Leiterplatte 52, insbesondere der elektrischen Zellverbinder 52eV", mit den Zelltabs 22 und stoffschlüssiges Verbinden, insbesondere Verschweißen, der Zelltabs 22, insbesondere jeweils, nächster Pouchzellen 21 zum, insbesondere unmittelbaren, elektrischen Verbinden der Zelltabs 22 nächster Pouchzellen 21 miteinander.

Im gezeigten Ausführungsbeispiel sind die Pouchzellen 21 seriell geschaltet, insbesondere in der Stapelrichtung z.

Außerdem weist im gezeigten Ausführungsbeispiel der Schritt a) auf: Anordnen des Stapels 20 zwischen dem ersten Strukturteil 11 und dem zweiten Strukturteil 12. Der Schritt c) weist auf: stoffschlüssiges Verbinden, insbesondere Verschweißen, des ersten Strukturteils 11 und des zweiten Strukturteils 12 zum, insbesondere unmittelbaren, mechanischen Verbinden des ersten Strukturteils 11 und des zweiten Strukturteils 12 miteinander.

Insbesondere weist im gezeigten Ausführungsbeispiel das erste Strukturteil 11 eine erste Struktur- bzw. Gehäusewand 13 auf. Das zweite Strukturteil 12 weist eine zweite Struktur- bzw. Gehäusewand 14 auf. Die zweite Struktur- bzw. Gehäusewand 14 ist zu der ersten Struktur- bzw. Gehäusewand 13 mit einem festen Abstand 10A, insbesondere in der Stapelrichtung z, gegenüberliegend angeordnet, wie in Fig. 6 gezeigt. Der Stapel 20 ist zwischen der ersten Struktur- bzw. Gehäusewand 13 und der zweiten Struktur- bzw. Gehäusewand 14 angeordnet. Eine Höhe 20H des Stapels 20, insbesondere in der Stapelrichtung z, ist durch die erste Struktur- bzw. Gehäusewand 13 und die zweite Struktur- bzw. Gehäusewand 14, insbesondere ihren festen Abstand 10A, begrenzt.

Der Schritt a) weist auf: Anordnen des Stapels 20 auf der ersten Struktur- bzw. Gehäusewand 13 und zeitlich danach Anordnen der zweiten Struktur- bzw. Gehäusewand 14 auf dem Stapel 20 derart, dass die zweite Struktur- bzw. Gehäusewand 14 zu der ersten Struktur- bzw. Gehäusewand 13 mit dem festen Abstand 10A gegenüberliegend angeordnet ist, dass der Stapel 20 zwischen der ersten Struktur- bzw. Gehäusewand 13 und der zweiten Struktur- bzw. Gehäusewand 14 angeordnet ist und die Höhe 20H des Stapels 20, insbesondere in der Stapelrichtung z, durch die erste Struktur- bzw. Gehäusewand 13 und die zweite Struktur- bzw. Gehäusewand 14 begrenzt ist.

Im Detail erstrecken im gezeigten Ausführungsbeispiel die erste Struktur- bzw. Gehäusewand und die zweite Struktur- bzw. Gehäusewand 14 sich jeweils in den zu der Stapelrichtung z orthogonalen Richtungen x, y. In anderen Worten: die zweite Struktur- bzw. Gehäusewand 14 ist, insbesondere mit einer Hauptebene, parallel zu der ersten Struktur- bzw. Gehäusewand 13, insbesondere einer Hauptebene der ersten Struktur- bzw. Gehäusewand 13, angeordnet. Weiter ist im gezeigten Ausführungsbeispiel der Abstand 10A in der Stapelrichtung z. Zudem gleicht im gezeigten Ausführungsbeispiel die Höhe 20H dem Abstand 10A.

Des Weiteren weist im gezeigten Ausführungsbeispiel der Schritt b) auf: Anordnen von dem mindestens einen elektrischen Leistungsverbinder 29 an dem Zelltab 22. Der Schritt c) weist auf: stoffschlüssiges Verbinden, insbesondere Verschweißen, des elektrischen Leistungsverbinders 29 mit dem Zelltab 22 zum, insbesondere unmittelbaren, elektrischen Verbinden des elektrischen Leistungsverbinders 29 mit dem Zelltab 22.

Außerdem weist die Stapelbegrenzungsstruktur 10 eine durch einen Strukturrand 10R definierte, insbesondere gemeinsame, Strukturöffnung 10O auf, wie in Fig. 7 gezeigt. Die Pouchzellen 21 sind derart ausgebildet und in dem Stapel 20 innerhalb der Stapelbegrenzungsstruktur 10 angeordnet, dass die Zelltabs 22 mindestens mit Tabteilen 22T, insbesondere jeweils, an der Strukturöffnung 10O über mindestens einen Randabschnitt 10RA des Strukturrands 10R hinausragen, insbesondere durch die Strukturöffnung 10O nach außen. Die Leiterplatte 52 ist, insbesondere sind die elektrischen Zellverbinder 52eV", mit den, insbesondere mehreren der, Tabteilen 22T elektrisch verbunden.

Zusätzlich weist der Akkupack 1 einen Rahmen 59 auf. Die Zelltabs 22, insbesondere mit den Tabteilen 22T, sind an der Strukturöffnung 10O angeordnet. Der Rahmen 59 trägt die Leiterplatte 52, und insbesondere die elektrischen Zellverbinder 52eV", und ist an der Strukturöffnung 10O angeordnet. Die Zelltabs 22, insbesondere die Tabteile 22T, und die Leiterplatte 52, insbesondere die elektrischen Zellverbinder 52eV", sind mittels der Stapelbegrenzungsstruktur 10 und des Rahmens 59 zueinander positioniert.

Im gezeigten Ausführungsbeispiel sind die Tabteile 22T, insbesondere jeweils, nächster Pouchzellen 21 durch die stoffschlüssige Verbindung 22S, insbesondere die Schweißverbindung, miteinander, insbesondere unmittelbar, elektrisch verbunden.

Der Schritt a) weist auf: Anordnen von den mehreren Pouchzellen 21 derart in dem Stapel 20 innerhalb der Stapelbegrenzungsstruktur 10, wobei die Stapelbegrenzungsstruktur 10 die durch den Strukturrand 10R definierte Strukturöffnung 10O aufweist, wobei die Pouchzellen 21 derart ausgebildet sind, dass die Zelltabs 22 mindestens mit den Tabteilen 22T an der Strukturöffnung 10O über den mindestens einen Randabschnitt 10RA des Strukturrands 10R hinausragen. Der Schritt c) weist auf: stoffschlüssiges Verbinden, insbesondere Verschweißen, der Leiterplatte 52, insbesondere der elektrischen Zellverbinder 52eV", mit den mehreren der Tabteilen 22T, insbesondere jeweils, zum elektrischen Verbinden der Leiterplatte 52, insbesondere der elektrischen Zellverbinder 52eV", mit den Tabteilen 22T und stoffschlüssiges Verbinden, insbesondere Verschweißen, der Tabteile 22T, insbesondere jeweils, nächster Pouchzellen 21 zum, insbesondere unmittelbaren, elektrischen Verbinden der Tabteile 22T nächster Pouchzellen 21 miteinander.

Im gezeigten Ausführungsbeispiel ist der elektrische Leistungsverbinder 29 mit einem der Tabteile 22T durch die stoffschlüssige Verbindung 29S, insbesondere die Schweißverbindung, insbesondere unmittelbar, elektrisch verbunden.

Der Schritt b) weist auf: Anordnen von dem mindestens einen elektrischen Leistungsverbinder 29 an dem Tabteil 22T. Der Schritt c) weist auf: stoffschlüssiges Verbinden, insbesondere Verschweißen, des elektrischen Leistungsverbinders 29 mit dem Tabteil 22T zum, insbesondere unmittelbaren, elektrischen Verbinden des elektrischen Leistungsverbinders 29 mit dem Tabteil 22T.

Weiter weist im gezeigten Ausführungsbeispiel der Schritt a) auf: Anordnen von dem Stapel 20 derart innerhalb der Stapelbegrenzungsstruktur 10, dass die Zelltabs 22, insbesondere mit den Tabteilen 22T, an der Strukturöffnung 10O angeordnet sind. Der Schritt b) weist auf: Anordnen von dem Rahmen 59 derart an der Strukturöffnung 10O, dass die Zelltabs 22, insbesondere die Tabteile 22T, und die Leiterplatte 52, insbesondere die elektrischen Zellverbinder 52eV", mittels der Stapelbegrenzungsstruktur 10 und des Rahmens 59 zueinander positioniert sind.

Insbesondere definiert im gezeigten Ausführungsbeispiel der Strukturrand 10R eine, insbesondere zu der Tabseite 20V parallele, Öffnungsebene 10E der Strukturöffnung 10O. Die Tabteile 22T verlaufen, insbesondere nur, parallel zu der Öffnungsebene 10E.

Im gezeigten Ausführungsbeispiel weist der Schritt c) auf: Anordnen einer Schweißunterlage 150, insbesondere eines Schweißambosses, mindestens teilweise zwischen mindestens einem der, insbesondere parallel verlaufenden, Tabteile 22T und dem Randabschnitt 10RA, insbesondere parallel zu dem Tabteil 22T, und Verschweißen des Tabteils 22T mittels der Schweißunterlage 150, wie in Fig. 8 gezeigt.

Zudem ist im gezeigten Ausführungsbeispiel der elektrische Leistungsverbinder 29 mindestens teilweise zwischen dem, insbesondere parallel verlaufenden, Tabteil 22T und dem Randabschnitt 10RA, insbesondere parallel zu dem Tabteil 22T, angeordnet.

Des Weiteren sind im gezeigten Ausführungsbeispiel die elektrischen Zellverbinder 52eV" entfernter als die, insbesondere mehreren der, Tabteile 22T von dem Stapel 20 bzw. Außenhüllen der Pouchzellen 21 angeordnet.

Im Detail sind im gezeigten Ausführungsbeispiel die Tabteile 22T, insbesondere aus der Richtung -y in die Richtung z, -z, abgebogene Teile der Zelltabs 22 und stehen, insbesondere jeweils, über einen, insbesondere jeweils, in Verlängerung einer Biegungsachse der Zelltabs 22 nächsten bzw. benachbarten Randabschnitt 10RA hinaus.

Außerdem ist im gezeigten Ausführungsbeispiel die Stapelbegrenzungsstruktur 10 bzw. das Stapelgehäuse 10 quaderförmig und weist mindestens vier, im gezeigten Ausführungsbeispiel fünf, Struktur- bzw. Gehäusewände 13, 14, 15, 16, 17 auf. Wandränder 13R, 14R, 15R, 16R von vier der Struktur- bzw. Gehäusewände 13, 14, 15, 16 definieren die Strukturöffnung 10O, insbesondere umfangsseitig, wie in Fig. 6 gezeigt.

Im gezeigten Ausführungsbeispiel weist das erste Strukturteil 11 die erste Struktur- bzw. Gehäusewand bzw. Oberseitenwand 13, die Struktur- bzw. Gehäusewand, insbesondere Umfangsseitenwand, 15 und die Struktur- bzw. Gehäusewand, insbesondere die Rückseitenwand, 17 auf. Das zweite Strukturteil 12 weist die zweite Struktur- bzw. Gehäusewand bzw. Unterseitenwand 14 und die Struktur- bzw. Gehäusewand, insbesondere Umfangsseitenwand, 16 auf.

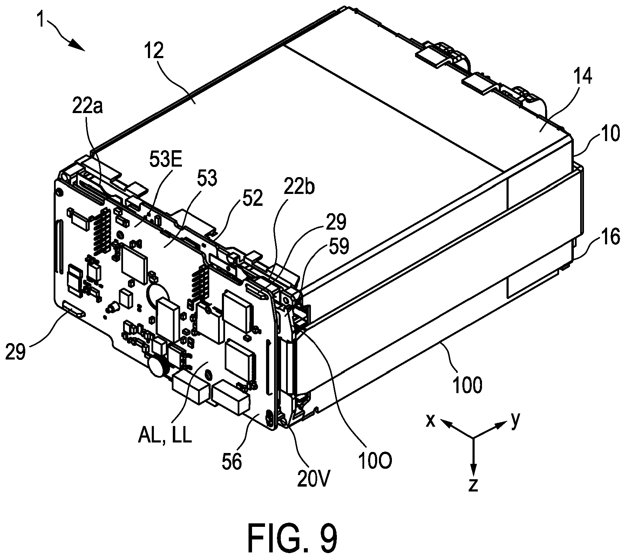

Weiter weist der Akkupack 1 eine weitere Leiterplatte 53 auf, wie in Fig. 9 gezeigt. Die weitere Leiterplatte 53 ist auf der Tabseite, insbesondere Vorderseite, 20V entfernter als die Leiterplatte 52 von dem Stapel 20 angeordnet, insbesondere mit einer weiteren Plattenebene 53E parallel zu der Tabseite 20V.

Die weitere Leiterplatte 53 ist breiter als die Tabspalten 22a, 22b.

Zusätzlich trägt die weitere Leiterplatte 53 Leistungselektronik 56. Die Leistungselektronik 56 ist zur Steuerung der Abgabe der Antriebsleistung AL von dem Akkupack 1 und/oder einer Aufnahme von Ladeleistung LL durch den Akkupack 1, insbesondere in Abhängigkeit von den gemessenen Spannungen SP, ausgebildet.

Im gezeigten Ausführungsbeispiel entspricht, insbesondere gleicht, die Breite der weiteren Leiterplatte 53 einer Breite des Stapels 20, insbesondere in der zu der Stapelrichtung z orthogonalen Richtung x.

Zudem tragen/trägt im gezeigten Ausführungsbeispiel der Rahmen 59 und/oder die Leiterplatte 52 die weitere Leiterplatte 53.

Des Weiteren ist im gezeigten Ausführungsbeispiel die weitere Leiterplatte 53, insbesondere die Leistungselektronik 56, mit der Leiterplatte 52, insbesondere der Messelektronik 55, elektrisch verbunden.

Außerdem ist im gezeigten Ausführungsbeispiel die weitere Leiterplatte 53, insbesondere die Leistungselektronik 56, mit dem mindestens einen elektrischen Leistungsverbinder 29 elektrisch verbunden.

Insbesondere ist die Leiterplatte 52, insbesondere die Messelektronik 55, mit allen der Zelltabs 22 mit Ausnahme des Zelltabs 22 auf Masse (Englisch: Ground; Abkürzung GND) - 0. Zellpotential - und des Zelltabs 22 auf Nennspannung NSP des Akkupacks 1 - 10. Zellpotential - mittels der elektrischen Zellverbinder 52eV" elektrisch verbunden. Die Leiterplatte 52, insbesondere die Messelektronik 55, ist mit dem Zelltab 22 auf Masse und dem Zelltab 22 auf Nennspannung NSP mittels der elektrischen Leistungsverbinder 29 und der weiteren Leiterplatte 53 elektrisch verbunden. In alternativen Ausführungsbeispielen kann die Leiterplatte, insbesondere die Messelektronik, mit dem Zelltab auf Masse und/oder dem Zelltab auf Nennspannung, insbesondere jeweils, mittels eines elektrischen Zellverbinders elektrisch verbunden sein.

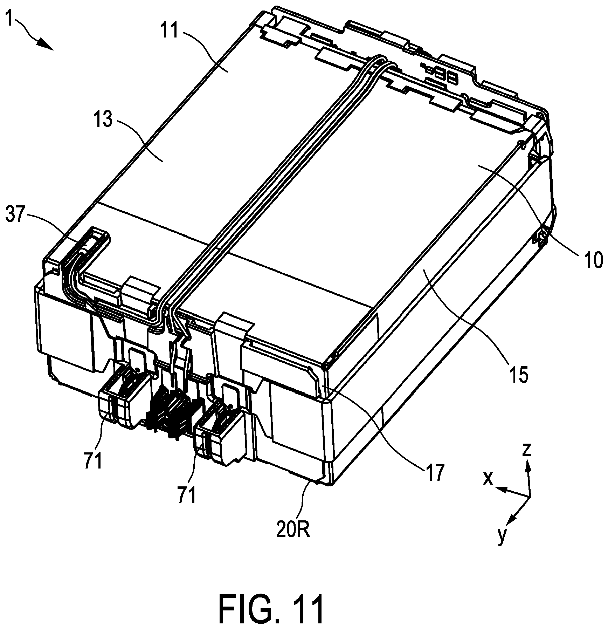

Weiter weist im gezeigten Ausführungsbeispiel der Akkupack 1 mehrere Akkupackkontakte 71 auf, wie in Fig. 11 gezeigt. Die Akkupackkontakte 71 sind zur elektrischen Verbindung des Akkupacks 1 und des Bearbeitungsgeräts 101 miteinander zur Versorgung des Bearbeitungsgeräts 101 mit elektrischer Antriebsleistung AL von dem Akkupack 1 ausgebildet. Zudem ist die weitere Leiterplatte 53, insbesondere die Leistungselektronik 56, mit den Akkupackkontakten 71 elektrisch verbunden.

Insbesondere sind die Akkupackkontakte 71 auf einer der Tabseite, insbesondere Vorderseite, 20V des Stapels 20 gegenüberliegenden Rückseite 20R des Stapels 20 angeordnet, insbesondere an der Stapelbegrenzungsstruktur 10, insbesondere an der Struktur- bzw. Gehäusewand bzw. Rückseitenwand 17.

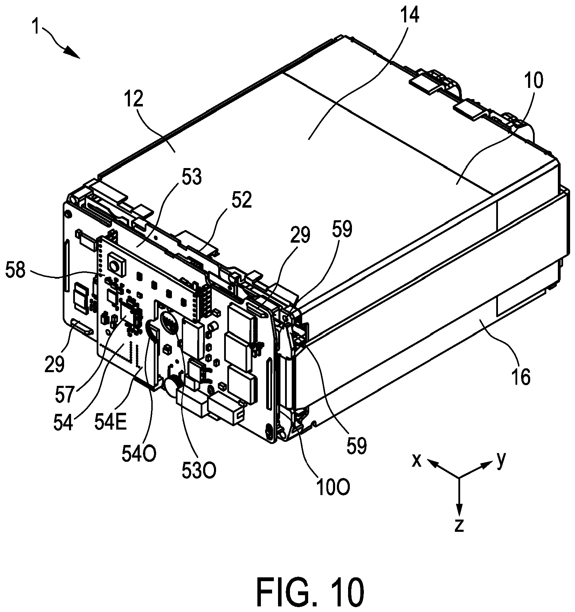

Des Weiteren weist der Akkupack 1 eine, insbesondere nochmals, weitere Leiterplatte 54 auf, wie in Fig. 10 gezeigt. Die, insbesondere nochmals, weitere Leiterplatte 54 ist auf der Tabseite, insbesondere Vorderseite, 20V entfernter als die Leiterplatte 52, und insbesondere als die weitere Leiterplatte 53, von dem Stapel 20 angeordnet, insbesondere mit einer, insbesondere nochmals, weiteren Plattenebene 54E parallel zu der Tabseite 20V. Die, insbesondere nochmals, weitere Leiterplatte 54 trägt Benutzerschnittstellenelektronik 57 und Übertragungselektronik 58. Die Benutzerschnittstellenelektronik 57 ist zur Interaktion mit einem Benutzer ausgebildet. Die Übertragungselektronik 58 ist zur kabellosen Übertragung von mindestens einem Betriebsparameter und/oder Betriebszustand ausgebildet.

Im gezeigten Ausführungsbeispiel ist die Benutzerschnittstellenelektronik 57 zum Ausgeben, insbesondere Anzeigen, eines Ladezustands des Akkupacks 1 ausgebildet.

Außerdem trägt im gezeigten Ausführungsbeispiel die weitere Leiterplatte 53 die, insbesondere nochmals, weitere Leiterplatte 54.

Weiter ist im gezeigten Ausführungsbeispiel die, insbesondere nochmals, weitere Leiterplatte 54, insbesondere sind die Benutzerschnittstellenelektronik 57 und die Übertragungselektronik 58, mit der Leiterplatte 52, insbesondere der Messelektronik 55, und/oder der weiteren Leiterplatte 53, insbesondere der Leistungselektronik 56, elektrisch verbunden.

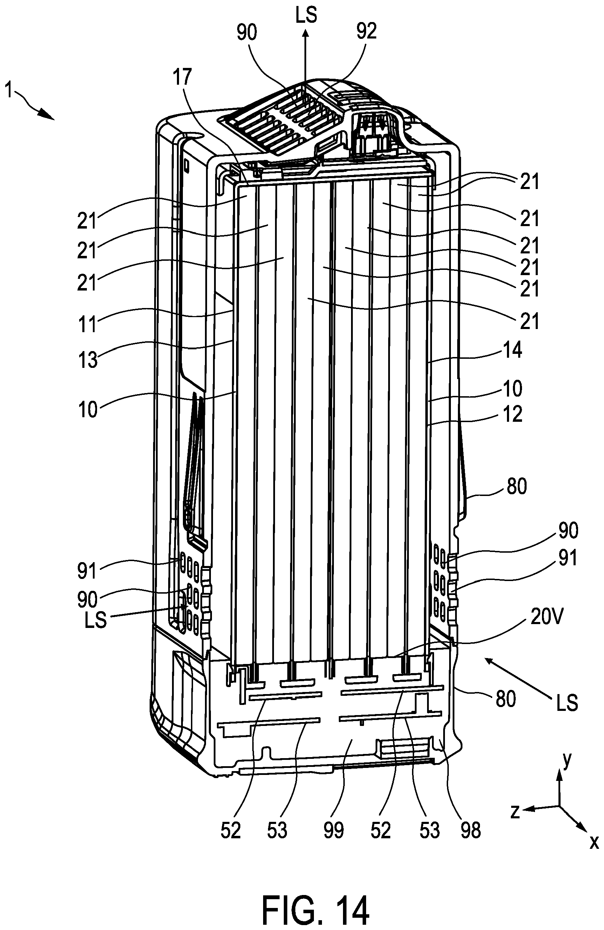

Zudem weist die Leiterplatte 52, und insbesondere die mindestens eine weitere Leiterplatte 53, 54, insbesondere jeweils, eine Aussparung 52O, 53O, 540, insbesondere ein Durchgangsloch, auf. Die Aussparung 520, 530, 540 ist zur Durchführung einer Sensorleitung 30L, für einen Fluss von Vergussmasse 99, wie in Fig. 14 gezeigt, und/oder zur Positionierung der Leiterplatte 52, insbesondere der Leiterplatten 52, 53, 54 zueinander, ausgebildet.

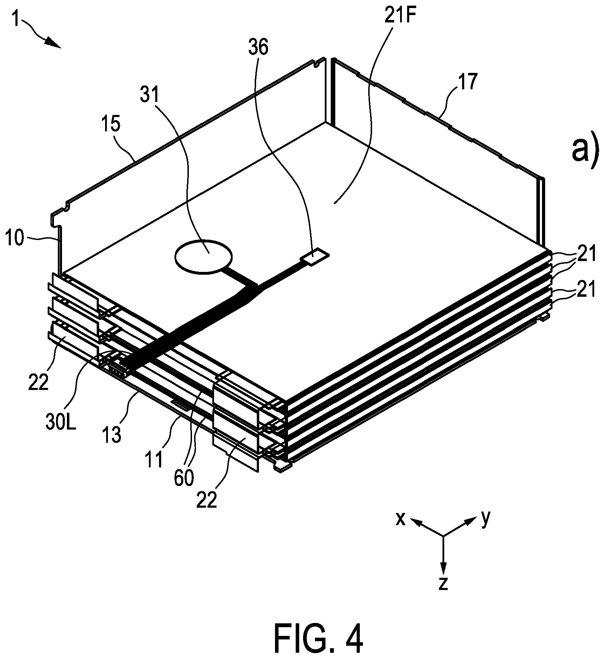

Im gezeigten Ausführungsbeispiel weist der Akkupack 1 einen Drucksensor 31 auf, wie in Fig. 4 gezeigt. Der Drucksensor 31 ist zur Erfassung, insbesondere Messung, einer Druckkraft in der Stapelrichtung z wirkend auf die Pouchzellen 21 ausgebildet. Des Weiteren weist der Akkupack 1 einen inneren Temperatursensor 36 auf. Der innere Temperatursensor 36 ist zur Messung einer inneren Temperatur des Stapels 20 ausgebildet. Die Sensorleitung 30L ist von dem Drucksensor 31 und dem inneren Temperatursensor 36. Die Leiterplatte 52, insbesondere die Messelektronik 55, ist mit dem Drucksensor 31 und dem inneren Temperatursensor 36 mittels der Sensorleitung 30L elektrisch verbunden.

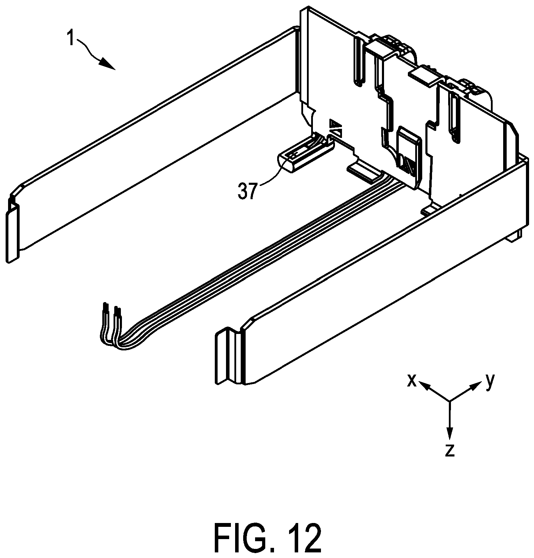

Des Weiteren weist im gezeigten Ausführungsbeispiel der Akkupack 1 einen äußeren Temperatursensor 37 auf, wie in Fig. 11 und 12 gezeigt. Der äußere Temperatursensor 37 ist zur Messung einer äußeren Temperatur des Stapels 20 ausgebildet. Die Leiterplatte 52, insbesondere die Messelektronik 55, ist mit dem Temperatursensor 37 elektrisch verbunden.

Außerdem ist im gezeigten Ausführungsbeispiel die Leistungselektronik 56 zur Steuerung der Abgabe der Antriebsleistung AL von dem Akkupack 1 und/oder der Aufnahme von der Ladeleistung LL durch den Akkupack 1 in Abhängigkeit von der erfassten, insbesondere gemessenen, Druckkraft, der gemessenen inneren Temperatur und der gemessenen äußeren Temperatur ausgebildet.

Weiter sind im gezeigten Ausführungsbeispiel die Zelltabs 22 und die mindestens eine Leiterplatte 52, 53, 54 durch die, insbesondere wärmeleitfähige, Vergussmasse 99, insbesondere in einem gemeinsamen Vergussblock 98, eingeschlossen. Die Vergussmasse 99 reicht bis zu Außenhüllen der Pouchzellen 21 hin.

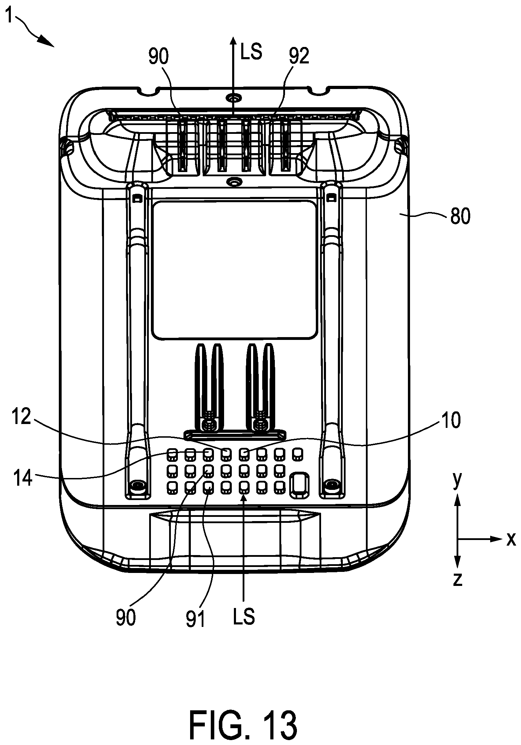

Zudem weist im gezeigten Ausführungsbeispiel der Akkupack 1 ein Akkupackgehäuse 80 auf, wie in Fig. 13 und 14 gezeigt. Die Pouchzellen 21, und insbesondere die Leiterplatte 52, die Messelektronik 55, die elektrischen Zellverbinder 52eV", der mindestens eine elektrische Leistungsverbinder 29, die Stapelbegrenzungsstruktur 10, der Rahmen 59, die weitere Leiterplatte 53, die Leistungselektronik 56, die, insbesondere nochmals, weitere Leiterplatte 54, die Benutzerschnittstellenelektronik 57, die Übertragungselektronik 58, der Drucksensor 31, der innere Temperatursensor 36, der äußere Temperatursensor 37 und die Vergussmasse 99, sind innerhalb des Akkupackgehäuses 80 angeordnet.

Insbesondere ist das Akkupackgehäuse 80 als Gießform für die Vergussmasse 99 ausgebildet.

Des Weiteren weist im gezeigten Ausführungsbeispiel der Akkupack 1 mindestens einen Luftkühlkreislauf 90 aufweisend eine Anzahl von Lufteinlassöffnungen 91 und eine Anzahl von Luftauslassöffnungen 92 in dem Akkupackgehäuse 80 für eine Kühlluftströmung LS von der Anzahl von Lufteinlassöffnungen 91 an den Pouchzellen 21, insbesondere der Stapelbegrenzungsstruktur 10, vorbei zu der Anzahl von Luftauslassöffnungen 92 zur Kühlung der Pouchzellen 21 auf. Der äußere Temperatursensor 37 ist in dem Luftkühlkreislauf 90 zwischen der Anzahl von Lufteinlassöffnungen 91 und der Anzahl von Luftauslassöffnungen 92, insbesondere der Anzahl von Lufteinlassöffnungen 91 und/oder der Anzahl von Luftauslassöffnungen 92 zugewandt, angeordnet.

Außerdem weist im gezeigten Ausführungsbeispiel die Stapelbegrenzungsstruktur 10 eine thermische Verbindung mit den Pouchzellen 21 auf und ist thermisch leitfähig.

Insbesondere berührt die Stapelbegrenzungsstruktur bzw. das Stapelgehäuse 10, insbesondere berühren die Struktur- bzw. Gehäusewände 13, 14, 15, 16, 17, die Pouchzellen 21 und zwischen den Pouchzellen 21 und den Struktur- bzw. Gehäusewänden 15, 16, 17 ist Wärmeleitpaste.

Weiter weist im gezeigten Ausführungsbeispiel der Akkupack 1 mindestens ein Ausgleichselement 60, insbesondere ein Schaumstoff auf, wie in Fig. 4 bis 6 gezeigt. Das mindestens eine Ausgleichselement 60 ist in dem Stapel 20 angeordnet. Das mindestens eine Ausgleichselement 60 erstreckt sich über einen Großteil einer Fläche 21F der Pouchzellen 21 und ist dazu ausgebildet, über eine Ausgleichsdicke 60D des mindestens einen Ausgleichselements 60 die Höhe 20H des Stapels 20 an den, insbesondere festen, Abstand 10A zwischen der ersten Struktur- bzw. Gehäusewand 13 und der zweiten Struktur- bzw. Gehäusewand 14 anzupassen, insbesondere anzugleichen, und insbesondere ein Aufblähen, soweit vorhanden, der Pouchzellen 21 in der Stapelrichtung z zu puffern.

Im gezeigten Ausführungsbeispiel weist der Akkupack 1 fünf Ausgleichselemente 60 auf. In alternativen Ausführungsbeispielen kann der Akkupack nur ein einziges Ausgleichselement aufweisen.

Insbesondere sind zwischen jeweils zwei der Ausgleichselemente 60 zwei der Pouchzellen 21 angeordnet. Dies ermöglicht, dass die Zelltabs 22 gleich sein können, insbesondere die Tabteile 22 in der Stapelrichtung z gleich lang.

Zudem erstreckt im gezeigten Ausführungsbeispiel das mindestens eine Ausgleichselement 60 sich in den zu der Stapelrichtung z orthogonalen Richtungen x, y. Des Weiteren erstreckt im gezeigten Ausführungsbeispiel das mindestens eine Ausgleichselement 60 sich über die komplette Fläche 21F der Pouchzellen 21.

Zusätzlich ist im gezeigten Ausführungsbeispiel das mindestens eine Ausgleichselement 60 eine thermische Isolierung.

Außerdem weist im gezeigten Ausführungsbeispiel der Akkupack 1 eine maximale elektrische Antriebsleistung MAL von 3 kW auf. In alternativen Ausführungsbeispielen kann der Akkupack eine maximale elektrische Antriebsleistung von minimal 1 kW und/oder von maximal 10 kW aufweisen.

Zusätzlich weist im gezeigten Ausführungsbeispiel der Akkupack 1 eine Nennspannung NSP von 36 V auf. In alternativen Ausführungsbeispielen kann der Akkupack eine Nennspannung von minimal 10 V und/oder von maximal 100 V aufweisen.

Zusätzlich weist im gezeigten Ausführungsbeispiel der Akkupack 1 einen maximalen Energieinhalt MEI von 337 Wh auf. In alternativen Ausführungsbeispielen kann der Akkupack einen maximalen Energieinhalt von minimal 100 Wh und/oder von maximal 1000 Wh aufweisen.

Zusätzlich weist im gezeigten Ausführungsbeispiel der Akkupack 1 eine Masse m1 von 2 kg auf. In alternativen Ausführungsbeispielen kann der Akkupack eine Masse von minimal 0,5 kg und/oder von maximal 10 kg aufweisen.

Zusätzlich weist im gezeigten Ausführungsbeispiel der Akkupack 1 eine Höhe 1H, insbesondere in der Stapelrichtung z, von 5 cm, eine Breite 1B, insbesondere in der Richtung x, von 10 cm, und eine Tiefe 1T, insbesondere in der Richtung y, von 15 cm auf. In alternativen Ausführungsbeispielen kann der Akkupack eine Höhe von minimal 2,5 cm und/oder von maximal 10 cm, und/oder eine Breite von minimal 5 cm und/oder von maximal 20 cm, und/oder eine Tiefe von minimal 7,5 cm und/oder von maximal 30 cm aufweisen.

Fig. 1 zeigt ein erfindungsgemäßes Bearbeitungssystem 100. Das Bearbeitungssystem 100 weist den Akkupack 1 und ein elektrisch angetriebenes Bearbeitungsgerät 101 auf. Der Akkupack 1 und das Bearbeitungsgerät 101 sind zur elektrischen Verbindung miteinander zur Versorgung des Bearbeitungsgeräts 101 mit elektrischer Antriebsleistung AL von dem Akkupack 1 ausgebildet, insbesondere elektrisch verbunden.

Im Detail weist das Bearbeitungsgerät 101 eine Akkuaufnahme 102 auf. Die Akkuaufnahme 102 ist zum Aufnehmen des Akkupacks 1 ausgebildet. Insbesondere ist der Akkupack 1 aufgenommen.

In Fig. 1 ist das elektrisch angetriebene Bearbeitungsgerät 101 eine Säge101', ein Trennschleifer 101" oder ein Blasgerät 101‴. In alternativen Ausführungsbeispielen kann das Bearbeitungsgerät ein Hoch-Entaster, ein Freischneider, eine Heckenschere, ein Heckenschneider, ein Laubbläser, eine Astschere, ein Kehrgerät, eine Kehrwalze, eine Kehrbürste, ein Rasenmäher, ein Vertikutierer oder eine Grasschere sein.

Wie die gezeigten und oben erläuterten Ausführungsbeispiele deutlich machen, stellt die Erfindung einen Akkupack zur Versorgung eines elektrisch angetriebenen Bearbeitungsgeräts mit elektrischer Antriebsleistung, ein Bearbeitungssystem aufweisend einen solchen Akkupack und ein elektrisch angetriebenes Bearbeitungsgerät und ein Verfahren zur Herstellung eines Akkupacks zur Versorgung eines elektrisch angetriebenen Bearbeitungsgeräts mit elektrischer Antriebsleistung, wobei der Akkupack und das Verfahren jeweils verbesserte Eigenschaften aufweisen, bereit.

## Patentansprüche

1. Akkupack (1) zur Versorgung eines elektrisch angetriebenen Bearbeitungsgeräts (101) mit elektrischer Antriebsleistung (AL), wobei der Akkupack (1) aufweist:
- mehrere Pouchzellen (21), wobei die Pouchzellen (21) Zelltabs (22) aufweisen und derart ausgebildet und in einem Stapel (20) angeordnet sind, dass die Zelltabs (22) auf einer gemeinsamen Tabseite (20V) des Stapels (20) in zwei Tabspalten (22a, 22b) angeordnet sind, wobei abgewandte Endgrenzen (22aL, 22bR) der Tabspalten (22a, 22b) einen Zwischenbereich (22Z) definieren, und
- eine Leiterplatte (52), wobei die Leiterplatte (52) nur innerhalb des Zwischenbereichs (22Z) angeordnet ist und mit den Zelltabs (22) elektrisch verbunden ist.

2. Akkupack (1) nach Anspruch 1,
- wobei die Leiterplatte (52) mit einer Plattenebene (52E) parallel zu der Tabseite (20V) angeordnet ist.

3. Akkupack (1) nach einem der vorhergehenden Ansprüche,
- wobei die Leiterplatte (52) Messelektronik (55) trägt, wobei die Messelektronik (55) zur Messung von Spannungen (SP) der Pouchzellen (21) ausgebildet ist.

4. Akkupack (1) nach einem der vorhergehenden Ansprüche,
- wobei elektrische Verbindungen (52eV`) zwischen der Leiterplatte (52) und mehreren der Zelltabs (22) gleich sind.

5. Akkupack (1) nach einem der vorhergehenden Ansprüche,
- wobei die Leiterplatte (52) mit mehreren der Zelltabs (22) mittels elektrischer Zellverbinder (52eV") elektrisch verbunden ist, wobei die Zellverbinder (52eV") unflexibel sind.

6. Akkupack (1) nach einem der vorhergehenden Ansprüche,
- wobei die Leiterplatte (52) mit mehreren der Zelltabs (22) mittels elektrischer Zellverbinder (52eV") elektrisch verbunden ist, wobei die Zellverbinder (52eV") über einen Plattenrand (52R) der Leiterplatte (52) hinausragen.

7. Akkupack (1) nach einem der vorhergehenden Ansprüche,
- wobei die Leiterplatte (52) mit mehreren der Zelltabs (22) durch eine stoffschlüssige Verbindung (52S) elektrisch verbunden ist, oder
- wobei die Zelltabs (22) nächster Pouchzellen (21) durch eine stoffschlüssige Verbindung (22S) miteinander elektrisch verbunden sind, oder
- wobei der Akkupack (1) eine Stapelbegrenzungsstruktur (10) aufweist, wobei die Stapelbegrenzungsstruktur (10) ein erstes Strukturteil (11) und ein zweites Strukturteil (12) aufweist, wobei der Stapel (20) zwischen dem ersten Strukturteil (11) und dem zweiten Strukturteil (12) angeordnet ist, wobei das erste Strukturteil (11) und das zweite Strukturteil (12) durch mindestens eine stoffschlüssige Verbindung (10S) miteinander mechanisch verbunden sind, oder
- wobei der Akkupack (1) mindestens einen elektrischen Leistungsverbinder (29) aufweist, wobei der elektrische Leistungsverbinder (29) mit einem der Zelltabs (22) durch eine stoffschlüssige Verbindung (29S) elektrisch verbunden ist.

8. Akkupack (1) nach einem der vorhergehenden Ansprüche, wobei der Akkupack (1) aufweist:
- eine Stapelbegrenzungsstruktur (10), wobei die Stapelbegrenzungsstruktur eine durch einen Strukturrand (10R) definierte Strukturöffnung (10O) aufweist, wobei die Pouchzellen (21) derart ausgebildet und in dem Stapel (20) innerhalb der Stapelbegrenzungsstruktur (10) angeordnet sind, dass die Zelltabs (22) mindestens mit Tabteilen (22T) an der Strukturöffnung (10O) über mindestens einen Randabschnitt (10RA) des Strukturrands (10R) hinausragen, wobei die Leiterplatte (52) mit den Tabteilen (22T) elektrisch verbunden ist, oder
- eine Stapelbegrenzungsstruktur (10) aufweisend eine Strukturöffnung (10O), wobei der Stapel (20) innerhalb der Stapelbegrenzungsstruktur (10) angeordnet ist und wobei die Zelltabs (22) an der Strukturöffnung (10O) angeordnet sind, und einen Rahmen (59), wobei der Rahmen (59) die Leiterplatte (52) trägt und an der Strukturöffnung (10O) angeordnet ist, wobei die Zelltabs (22) und die Leiterplatte (52) mittels der Stapelbegrenzungsstruktur (10) und des Rahmens (59) zueinander positioniert sind.

9. Akkupack (1) nach einem der vorhergehenden Ansprüche, wobei der Akkupack (1) aufweist:
- eine weitere Leiterplatte (53), wobei die weitere Leiterplatte (53) auf der Tabseite (20V) entfernter als die Leiterplatte (52) von dem Stapel (20) angeordnet ist,
- wobei die weitere Leiterplatte (53) breiter als die Tabspalten (22a, 22b) ist, oder
- wobei die weitere Leiterplatte (53) Leistungselektronik (56) trägt, wobei die Leistungselektronik (56) zur Steuerung der Abgabe der Antriebsleistung (AL) von dem Akkupack (1) oder einer Aufnahme von Ladeleistung (LL) durch den Akkupack (1) ausgebildet ist.

10. Akkupack (1) nach einem der vorhergehenden Ansprüche, wobei der Akkupack (1) aufweist:
- eine weitere Leiterplatte (54), wobei die weitere Leiterplatte (54) auf der Tabseite (20V) entfernter als die Leiterplatte (52) von dem Stapel (20) angeordnet ist,
- wobei die weitere Leiterplatte (54) Benutzerschnittstellenelektronik (57), wobei die Benutzerschnittstellenelektronik (57) zur Interaktion mit einem Benutzer ausgebildet ist, oder Übertragungselektronik (58) trägt, wobei die Übertragungselektronik (58) zur kabellosen Übertragung von mindestens einem Betriebsparameter oder Betriebszustand ausgebildet ist.

11. Akkupack (1) nach einem der vorhergehenden Ansprüche,
- wobei die Leiterplatte (52) eine Aussparung (520) aufweist,
- wobei die Aussparung (52O) zur Durchführung einer Sensorleitung (30L), für einen Fluss von Vergussmasse (99) oder zur Positionierung der Leiterplatte (52) ausgebildet ist.

12. Akkupack (1) nach einem der vorhergehenden Ansprüche,
- wobei der Akkupack (1) eine maximale elektrische Antriebsleistung (MAL) von minimal 1 kW oder von maximal 10 kW aufweist, oder
- wobei der Akkupack (1) eine Nennspannung (NSP) von minimal 10 Voder von maximal 100 V aufweist, oder
- wobei der Akkupack (1) einen maximalen Energieinhalt (MEI) von minimal 100 Whoder von maximal 1000 Wh aufweist, oder
- wobei der Akkupack (1) eine Masse (m1) von minimal 0,5 kgoder von maximal 10 kg aufweistoder
- wobei der Akkupack (1) eine Höhe (1H) von minimal 2,5 cm oder von maximal 10 cm, oder eine Breite (1B) von minimal 5 cm oder von maximal 20 cm, oder eine Tiefe (1T) von minimal 7,5 cm oder von maximal 30 cm aufweist.

13. Bearbeitungssystem (100), wobei das Bearbeitungssystem (100) aufweist:
- einen Akkupack (1) nach einem der vorhergehenden Ansprüche, und
- ein elektrisch angetriebenes Bearbeitungsgerät (101),
- wobei der Akkupack (1) und das Bearbeitungsgerät (101) zur elektrischen Verbindung miteinander zur Versorgung des Bearbeitungsgeräts (101) mit elektrischer Antriebsleistung (AL) von dem Akkupack (1) ausgebildet sind.

14. Verfahren zur Herstellung eines Akkupacks (1) zur Versorgung eines elektrisch angetriebenen Bearbeitungsgeräts (101) mit elektrischer Antriebsleistung (AL), wobei das Verfahren die Schritte aufweist:
a) Anordnen von mehreren Pouchzellen (21) derart in einem Stapel (20), wobei die Pouchzellen (21) Zelltabs (22) aufweisen und derart ausgebildet sind, dass die Zelltabs (22) auf einer gemeinsamen Tabseite (20V) des Stapels (20) in zwei Tabspalten (22a, 22b) angeordnet sind, wobei abgewandte Endgrenzen (22aL, 22bR) der Tabspalten (22a, 22b) einen Zwischenbereich (22Z) definieren,
b) Anordnen von einer Leiterplatte (52) nur innerhalb des Zwischenbereichs (22Z), und
c) Elektrisches Verbinden der Leiterplatte (52) mit den Zelltabs (22).

15. Verfahren nach Anspruch 14,
- wobei der Schritt b) zeitlich nach dem Schritt a) durchgeführt wird, und
- wobei der Schritt c) zeitlich nach dem Schritt b) durchgeführt wird und aufweist: stoffschlüssiges Verbinden der Leiterplatte (52) mit mehreren der Zelltabs (22) zum elektrischen Verbinden der Leiterplatte (52) mit den Zelltabs (22) und stoffschlüssiges Verbinden der Zelltabs (22) nächster Pouchzellen (21) zum elektrischen Verbinden der Zelltabs (22) nächster Pouchzellen (21) miteinander.

## Claims

1. Battery pack (1) for supplying an electrically driven treatment apparatus (101) with an electric driving power (AL), the battery pack (1) comprising:
- a plurality of pouch cells (21), wherein the pouch cells (21) have cell tabs (22) and are configured and disposed in a stack (20) such that the cell tabs (22) are disposed on a common tab side (20V) of the stack (20) in two tab columns (22a, 22b), wherein averted end limits (22aL, 22bR) of the tab columns (22a, 22b) define an intermediate zone (22Z), and
- a circuit board (52), wherein the circuit board (52) is disposed only within the intermediate zone (22Z) and is electrically connected to the cell tabs (22).

2. Battery pack (1) according to claim 1,
- wherein the circuit board (52) with a board plane (52E) is disposed in parallel to the tab side (20V).

3. Battery pack (1) according to any of the preceding claims,
- wherein the circuit board (52) holds measuring electronics (55), wherein the measuring electronics (55) are configured for measuring voltages (SP) of the pouch cells (21).

4. Battery pack (1) according to any of the preceding claims,
- wherein electrical connections (52eV') between the circuit board (52) and a plurality of the cell tabs (22) are identical.

5. Battery pack (1) according to any of the preceding claims,
- wherein the circuit board (52) is electrically connected to a plurality of the cell tabs (22) by means of electrical cell connectors (52eV"), wherein the cell connectors (52eV") are inflexible.

6. Battery pack (1) according to any of the preceding claims,
- wherein the circuit board (52) is electrically connected to a plurality of the cell tabs (22) by means of electrical cell connectors (52eV"), wherein the cell connectors (52eV") project beyond a board edge (52R) of the circuit board (52).

7. Battery pack (1) according to any of the preceding claims,
- wherein the circuit board (52) is electrically connected to a plurality of the cell tabs (22) by material-bonding engagement (52S), or
- wherein the cell tabs (22) of next pouch cells (21) are electrically connected to each other by a material-bonding engagement (22S), or
- wherein the battery pack (1) has a stack limiting structure (10), wherein the stack limiting structure (10) has a first structural part (11) and a second structural part (12), wherein the stack (20) is disposed between the first structural part (11) and the second structural part (12), wherein the first structural part (11) and the second structural part (12) are mechanically connected to each other by at least one material-bonding engagement (10S), or
- wherein the battery pack (1) has at least one electric power connector (29), wherein the electric power connector (29) is electrically connected to one of the cell tabs (22) by a material-bonding engagement (29S).

8. Battery pack (1) according to any of the preceding claims, the battery pack (1) comprising:
- a stack limiting structure (10), wherein the stack limiting structure has a structure opening (10O) defined by a structure edge (10R), wherein the pouch cells (21) are configured and disposed in the stack (20) within the stack limiting structure (10) such that the cell tabs (22) at least with tab parts (22T) on the structure opening (10O) project beyond at least one edge portion (10RA) of the structure edge (10R), wherein the circuit board (52) is electrically connected to the tab parts (22T), or
- a stack limiting structure (10) having a structure opening (10O), wherein the stack (20) is disposed within the stack limiting structure (10), and wherein the cell tabs (22) are disposed on the structure opening (10O), and a frame (59), wherein the frame (59) holds the circuit board (52) and is disposed on the structure opening (10O), wherein the cell tabs (22) and the circuit board (52) are positioned in relation to each other by means of the stack limiting structure (10) and the frame (59).

9. Battery pack (1) according to any of the preceding claims, the battery pack (1) comprising:
- a further circuit board (53), wherein the further circuit board (53) is disposed on the tab side (20V) farther remote from the stack (20) than the circuit board (52),
- wherein the further circuit board (53) is wider than the tab columns (22a, 22b), or
- wherein the further circuit board (53) holds power electronics (56), wherein the power electronics (56) are configured for controlling the output of the driving power (AL) from the battery pack (1) or an input of charging power (LL) to the battery pack (1).

10. Battery pack (1) according to any of the preceding claims, the battery pack (1) comprising:
- a further circuit board (54), wherein the further circuit board (54) is disposed on the tab side (20V) farther remote from the stack (20) than the circuit board (52),
- wherein the further circuit board (54) holds user interface electronics (57), wherein the user interface electronics (57) are configured for interaction with a user, or transmission electronics (58), wherein the transmission electronics (58) are configured for wireless transmission of at least one operating parameter or operating condition.

11. Battery pack (1) according to any of the preceding claims,
- wherein the circuit board (52) has a recess (52O),
- wherein the recess (52O) is configured for passing through a sensor line (30L), for a flow of casting compound (99) or for positioning the circuit board (52).

12. Battery pack (1) according to any of the preceding claims,
- wherein the battery pack (1) has a maximum electric driving power (MAL) of a minimum of 1 kW or of a maximum of 10 kW, or
- wherein the battery pack (1) has a nominal voltage (NSP) of a minimum of 10 V or of a maximum of 100 V, or
- wherein the battery pack (1) has a maximum energy content (MEI) of a minimum of 100 Wh or of a maximum of 1000 Wh, or
- wherein the battery pack (1) has a mass (m1) of a minimum of 0.5 kg or of a maximum of 10 kg, or
- wherein the battery pack (1) has a height (1H) of a minimum of 2.5 cm or of a maximum of 10 cm, or a width (1B) of a minimum of 5 cm or of a maximum of 20 cm, or a depth (1T) of a minimum of 7.5 cm or of a maximum of 30 cm.

13. Treatment system (100), the treatment system (100) comprising:
- a battery pack (1) according to any of the preceding claims, and
- an electrically driven treatment apparatus (101),
- wherein the battery pack (1) and the treatment apparatus (101) are configured for electrical connection with each other for supplying the treatment apparatus (101) with electric driving power (AL) from the battery pack (1).

14. Method for the production of a battery pack (1) for supplying an electrically driven treatment apparatus (101) with electric driving power (AL), the method comprising the steps:
a) disposing a plurality of pouch cells (21) in a stack (20) such that, wherein the pouch cells (21) have cell tabs (22) and are configured such that, the cell tabs (22) are disposed on a common tab side (20V) of the stack (20) in two tab columns (22a, 22b), wherein averted end limits (22aL, 22bR) of the tab columns (22a, 22b) define an intermediate zone (22Z),
b) disposing a circuit board (52) only within the intermediate zone (22Z), and
c) electrically connecting the circuit board (52) to the cell tabs (22).

15. Method according to claim 14,
- wherein step b) is performed in time after step a), and
- wherein step c) is performed in time after step b) and comprises:
material-bonding engagement of the circuit board (52) to a plurality of the cell tabs (22) for electrical connection of the circuit board (52) to the cell tabs (22) and material-bonding engagement of the cell tabs (22) of next pouch cells (21) for electrical connection of the cell tabs (22) of next pouch cells (21) to each other.

## Revendications

1. Bloc d'accumulateurs (1) pour l'alimentation d'un appareil d'usinage (101) entraîné électriquement avec une puissance d'entraînement électrique (AL), le bloc d'accumulateurs (1) possédant :
- plusieurs cellules de poche (21), les cellules de poche (21) possédant des languettes de cellule (22) et étant configurées et disposées en un empilement (20) de telle sorte que les languettes de cellule (22) sont disposées sur un côté de languettes (20V) commun de l'empilement (20) dans deux colonnes de languettes (22a, 22b), des limites d'extrémité (22aL, 22bR) opposées des colonnes de languettes (22a, 22b) définissant une zone intermédiaire (22Z), et
- une carte de circuit imprimé (52), la carte de circuit imprimé (52) étant disposée uniquement à l'intérieur de la zone intermédiaire (22Z) et étant connectée électriquement aux languettes de cellule (22).

2. Bloc d'accumulateurs (1) selon la revendication 1,
- la carte de circuit imprimé (52) étant disposée avec un plan de carte (52E) parallèle au côté de languette (20V) .

3. Bloc d'accumulateurs (1) selon l'une des revendications précédentes,
- la carte de circuit imprimé (52) portant une électronique de mesure (55), l'électronique de mesure (55) étant configurée pour mesurer des tensions (SP) des cellules de poche (21).

4. Bloc d'accumulateurs (1) selon l'une des revendications précédentes,
- les connexions électriques (52eV') entre la carte de circuit imprimé (52) et plusieurs des languettes de cellule (22) étant identiques.

5. Bloc d'accumulateurs (1) selon l'une des revendications précédentes,
- la carte de circuit imprimé (52) étant connectée électriquement à une pluralité des languettes de cellule (22) au moyen de connecteurs de cellule (52eV") électriques, les connecteurs de cellule (52eV") étant rigides.

6. Bloc d'accumulateurs (1) selon l'une des revendications précédentes,
- la carte de circuit imprimé (52) étant connectée électriquement à plusieurs des languettes de cellule (22) au moyen de connecteurs de cellule (52eV") électriques, les connecteurs de cellule (52eV") faisant saillie d'un bord de carte (52R) de la carte de circuit imprimé (52).

7. Bloc d'accumulateurs (1) selon l'une des revendications précédentes,
- la carte de circuit imprimé (52) étant connectée électriquement à plusieurs des languettes de cellule (22) par une connexion par liaison de matières (52S), ou
- les languettes de cellule (22) des cellules de poche (21) suivantes étant connectées électriquement entre elles par une connexion par liaison de matières (22S), ou
- le bloc d'accumulateurs (1) possédant une structure de limitation d'empilement (10), la structure de limitation d'empilement (10) possédant une première partie de structure (11) et une deuxième partie de structure (12), l'empilement (20) étant disposé entre la première partie de structure (11) et la deuxième partie de structure (12), la première partie de structure (11) et la deuxième partie de structure (12) étant reliées mécaniquement l'une à l'autre par au moins une connexion par liaison de matières (10S), ou
- le bloc d'accumulateurs (1) possédant au moins un connecteur de puissance électrique (29), le connecteur de puissance électrique (29) étant connecté électriquement à l'une des languettes de cellule (22) par une connexion par liaison de matières (29S).

8. Bloc d'accumulateurs (1) selon l'une des revendications précédentes, le bloc d'accumulateurs (1) possédant :
- une structure de limitation d'empilement (10), la structure de limitation d'empilement présentant une ouverture de structure (10O) définie par un bord de structure (10R), les cellules de poche (21) étant configurées et disposées dans l'empilement (20) à l'intérieur de la structure de limitation d'empilement (10) de telle sorte que les languettes de cellule (22) font saillie au moins par des parties de languette (22T) au niveau de l'ouverture de structure (10O) au-delà d'au moins une portion de bord (10RA) du bord de structure (10R), la carte de circuit imprimé (52) étant connectée électriquement aux parties de languette (22T), ou
- une structure de limitation d'empilement (10) possédant une ouverture de structure (10O), l'empilement (20) étant disposé à l'intérieur de la structure de limitation d'empilement (10) et les languettes de cellule (22) étant disposées au niveau de l'ouverture de structure (10O), et un cadre (59), le cadre (59) supportant la carte de circuit imprimé (52) et étant disposé au niveau de l'ouverture de structure (10O), les languettes de cellule (22) et la carte de circuit imprimé (52) étant positionnées les unes par rapport aux autres au moyen de la structure de limitation d'empilement (10) et du cadre (59).

9. Bloc d'accumulateurs (1) selon l'une des revendications précédentes, le bloc d'accumulateurs (1) possédant :
- une carte de circuit imprimé supplémentaire (53), la carte de circuit imprimé supplémentaire (53) étant disposée sur le côté de languettes (20V) plus loin de l'empilement (20) que la carte de circuit imprimé (52),
- la carte de circuit imprimé supplémentaire (53) étant plus large que les colonnes de languettes (22a, 22b), ou
- la carte de circuit imprimé supplémentaire (53) portant de l'électronique de puissance (56), l'électronique de puissance (56) étant configurée pour commander la fourniture de la puissance d'entraînement (AL) par le bloc d'accumulateurs (1) ou une absorption de puissance de charge (LL) par le bloc d'accumulateurs (1) .

10. Bloc d'accumulateurs (1) selon l'une des revendications précédentes, le bloc d'accumulateurs (1) possédant :
- une carte de circuit imprimé supplémentaire (54), la carte de circuit imprimé supplémentaire (54) étant disposée sur le côté de languettes (20V) plus loin de l'empilement (20) que la carte de circuit imprimé (52),
- la carte de circuit imprimé supplémentaire (54) portant une électronique d'interface utilisateur (57), l'électronique d'interface utilisateur (57) étant configurée pour l'interaction avec un utilisateur, ou une électronique de transmission (58), l'électronique de transmission (58) étant configurée pour la transmission sans fil d'au moins un paramètre de fonctionnement ou un état de fonctionnement.

11. Bloc d'accumulateurs (1) selon l'une des revendications précédentes,
- la carte de circuit imprimé (52) possédant un évidement (52O),
- l'évidement (52O) étant configuré pour le passage d'une ligne de capteur (30L), pour un écoulement de masse de scellement (99) ou pour le positionnement de la carte de circuit imprimé (52).

12. Bloc d'accumulateurs (1) selon l'une des revendications précédentes,
- le bloc d'accumulateurs (1) présentant une puissance d'entraînement électrique maximale (MAL) au minimum de 1 kW ou au maximum de 10 kW, ou
- le bloc d'accumulateurs (1) présentant une tension nominale (NSP) au minimum de 10 V ou au maximum de 100 V, ou
- le bloc d'accumulateurs (1) présentant un contenu en énergie maximal (MEI) au minimum de 100 Wh et/ou au maximum de 1000 Wh, et/ou
- le bloc d'accumulateurs (1) présentant une masse (m1) au minimum de 0,5 kg ou au maximum de 10 kg, ou
- le bloc d'accumulateur (1) présentant une hauteur (1H) au minimum de 2,5 cm ou au maximum de 10 cm, ou une largeur (1B) au minimum de 5 cm ou au maximum de 20 cm, ou une profondeur (1T) au minimum de 7,5 cm ou au maximum de 30 cm.

13. Système d'usinage (100), le système d'usinage (100) possédant :
- un bloc d'accumulateurs (1) selon l'une des revendications précédentes, et
- un appareil d'usinage (101) à entraînement électrique,
- le bloc d'accumulateurs (1) et l'appareil d'usinage (101) étant configurés de façon à être connectés électriquement l'un à l'autre afin d'alimenter l'appareil d'usinage (101) en puissance d'entraînement électrique (AL) à partir du bloc d'accumulateurs (1).

14. Procédé de fabrication d'un bloc d'accumulateurs (1) pour l'alimentation en puissance d'entraînement électrique (AL) d'un appareil d'usinage (101) entraîné électriquement, le procédé comprenant les étapes suivantes :
a) disposition de plusieurs cellules de poche (21) en un empilement (20), les cellules de poche (21) possédant des languettes de cellule (22) et étant configurées de telle sorte que les languettes de cellule (22) sont disposées sur un côté de languettes (20V) commun de l'empilement (20) dans deux colonnes de languettes (22a, 22b), des limites d'extrémité (22aL, 22bR) opposées des colonnes de languettes (22a, 22b) définissant une zone intermédiaire (22Z),
b) disposition d'une carte de circuit imprimé (52) uniquement à l'intérieur de la zone intermédiaire (22Z), et
c) connexion électrique de la carte de circuit imprimé (52) aux languettes de cellule (22).

15. Procédé selon la revendication 14,
- l'étape b) étant exécutée chronologiquement après l'étape a), et
- l'étape c) étant exécutée chronologiquement après l'étape b) et comprenant : connexion par liaison de matières de la carte de circuit imprimé (52) à plusieurs des languettes de cellule (22) afin de connecter électriquement la carte de circuit imprimé (52) aux languettes de cellule (22), et connexion par liaison de matières des languettes de cellule (22) de cellules de poche (21) suivantes afin de connecter électriquement les languettes de cellule (22) de cellules de poche (21) suivantes entre elles.
